# EUROPEAN PATENT APPLICATION

(11) **EP 4 386 205 A1**
(43) Date of publication of application: **19.06.2024**
(21) Application number: 22213140.1
(22) Date of filing: 13.12.2022
(51) Int. Cl.: F03D 17/00

(54) **A METHOD FOR DETERMINING WAKE CONDITIONS AT A WIND TURBINE GENERATOR BY MEASURING BLADE DEFLECTION FROM AN IDEAL BLADE TRAJECTORY**

(71) Applicant: Ventus Engineering GmbH, 1110 Vienna (AT)
(72) Inventor: MINGALIEV, Shavkat, 1010 Wien (AT); LÜBKER, Poul Anker Skaarup, 6340 Baar (CH); TOLRON, Xavier, 1120 Wien (AT)
(74) Representative: Bak, Poul Erik

(57) **Abstract**

A method (100) for determining wake conditions (90) at a wind turbine generator (WTG) by measuring blade deflection from an ideal blade trajectory, wherein wind turbine generator (WTG) comprising a blade (16), said blade comprising an accelerometer (20), the method (100) comprising steps of:
- measuring (200) sensory data (80) of the accelerometer (20) during operation,
- time-stamping and time-synchronizing (210) the sensory data (80) collected by the accelerometer (20);
- dividing (300) the sensory data (80) into sub-data groups (82), wherein each sub-data group (82) comprises at least one full rotation of the blade (16);
- determining (400) wake conditions (90) as a function of at least one of the sub-data groups (82) and a wave function (84).

## Description

### Field of the Invention

The present invention relates to a method for determining wake conditions at a wind turbine generator, control system for determining wake conditions, and a wind turbine generator capable of determining wake conditions at said wind turbine generator.

### Background of the Invention

There are many different factors which determine the power output of wind turbine generator. One factor is wake at the wind turbine generator. The wake is in part typically due to an upstream wind turbine generator or another obstacle like mountainous terrain, a building, or a forest, which generate turbulence in the air. The downstream wind turbine generator will, due to the wake, generate less power compared to a situation without wake, i.e., the wake causes a power deficit. Furthermore, the wake will cause vibrations in the rotor which increases wear.

The wake primarily causes a power deficit of a wind turbine generator at wind speeds between cut-in wind speeds and up to wind speed at rated power. In other words, a power deficit is less expected at wind speeds higher than when rated power is reached.

It is well known that the wake can be reduced by adjusting the upstream wind turbine generator. This will cause a power loss at the upstream wind turbine generator, however, the downstream wind turbine generator can more than compensate the power loss at the upstream wind turbine generator, such that the overall power generation of both wind turbine generators is increased.

It is well known that LiDARs can be used for measuring wake at a wind turbine generator, however LiDARs are expensive and require a lot of data processing and maintenance. Thus, there is a need for another solution to determine wake conditions at a wind turbine generator.

### Object of the Invention

It is an object to provide a method and a control system for determining wake conditions, where the determined wake conditions can be used for protecting the individual wind turbine generator for too high loads outside design specifications which potentially will damage the blades and/or reduce expected lifetime for the blades, and furthermore this information can be used for controlling a wind turbine farm with an aim to optimize power production.

### Description of the Invention

An object of the invention is achieved by a method for determining wake conditions at a wind turbine generator by measuring blade deflection from an ideal blade trajectory, wherein the wind turbine generator comprises a blade, said blade comprising an accelerometer. The method comprising steps of:
- measuring sensory data of the accelerometer during operation,
- time-stamping and time-synchronizing the sensory data collected by the accelerometer;
- dividing the sensory data into sub-data groups, wherein each sub-data group comprises at least one full rotation of the blade; and
- determining wake conditions as a function of at least one of the sub-data groups and a wave function.

The wind turbine blade will rotate repeatedly around a rotor of the wind turbine generator, and thus the sensory data from the accelerometer will have a waveshape with some form of periodicity, although the wave's period and amplitude will change over time, due to changes of various parameters such as but not limited to wind speed and blade pitch angle. If the blade was a perfectly rigid unit, then the sensory data could be fitted a sine function with little to no deviation between sensory data and the sine function, i.e. the blade will follow an ideal blade trajectory. However, the blade is not perfectly rigid and thus it will not follow an ideal blade trajectory. Instead, various forces will permute or deflect the blade, i.e. various forces will cause a blade deflection. One cause of blade deflection is wake and it is well known that wake causes higher wear, and, in many cases, wake causes lower power production. It is well known that LIDARs can be used for measuring wake, however LIDARS are still expensive, and it requires a lot of computer power to calculate wake using LIDARs. The present method can determine wake conditions using sensory data from a single accelerometer.

The sensory data is divided into sub-data groups, wherein each sub-data group comprises at least one full rotation of the blade. In many embodiments the sub-data group will only comprise a single full rotation of the blade as more data will increase the risk that other parameters of the wind turbine generator are changed such as blade pitch angle or rotation speed due to changes to the wind speed or wind direction. However, the method will also work with sub-data groups comprising two, three, five, seven, ten or twenty rotations of the blade. At some number, the method will become less precise with increasing number since an increase in number will increase risk of a parameter being changed over the time of the sub-data group. The skilled person would be able to conduct experiments to determine an upper limit of rotations which can be included in the sub-data group.

The wake conditions are then determined as a function of at least one of the sub-data groups and a wave function. The wave function is chosen such that it simulates or is close to the ideal blade trajectory. There is a kind of proportionality between the difference between the at least one sub-data group and the wave function and the severity of the wake affecting the wind turbine blade. Thus, higher wake will affect the wind turbine blade, although the wind turbine blade is affected greater if wake is uneven in the rotation plane as is evident from the data presented in the figures.

The method can determine wake conditions with a single accelerometer measuring a single channel/dimension, but the method can also be performed by a single accelerometer measuring a two or three channels/dimensions. The method can be performed for a blade with two or more accelerometers positioned along the blade and it would be expected that the result can become more precise by having two or more accelerometers measuring one, two or three channels/dimensions.

It is expected that the method can be performed with accelerometers positioned anywhere on the wind turbine blade. The figures will show an example of the method being performed using sensory data from an accelerometer positioned two meters from a blade root of the blade. The method may even work using sensory data from an accelerometer positioned at the blade root, however there may be a cut-off between the two meters and the blade root where the method does not function, however a skilled person could perform simple tests for any given blade to determine this.

In general, the blade is more rigid closer to the blade root and thus larger forces are needed closer to the blade root to cause blade deflection from the ideal blade trajectory. Thus, accelerometers further away from the blade root will in general experience larger blade deflections and experience more blade deflections. The skilled person can performing a series experiments find an optimum position along the blade which is a compromise between noise and sensitivity to blade deflection which accelerometer position will the best sensory data.

The common wind turbine generator will have three blades and each blade may have one or more accelerometers along the longitudinal direction of the blade, and the one or more accelerometers may measure along one, two or three channels/dimensions. The determination of wake conditions is expected to improve with increased data, thus more accelerometers and/or more channels measuring sensory data will improve the method.

The blade will during a single rotation sweep an area called swept area.

In an aspect, the step of dividing may be performed as a function of the gravitational vector to identify one or more angular blade position points. The accelerometer may for example measure a channel parallel to a flapwise direction of the blade and in this case the middle value will be measured when the blade is at the 6 O'clock position or 12 O'clock. The same can be repeated for various channel orientation. Thus, the method will be able to determine when the blade has made a single or more rotations using the channel direction relative to the gravitational vector.

In an aspect, the step of dividing may be performed as a function of the one or more angular blade position points. It is only necessary to be able to identify a single angular blade position point in order to divide sensory data into one or more rotations as the blade will pass this angular blade position point during each rotation. Thus, this step is reliable.

In an aspect, the wave function may be a sine wave fitted to the at least one sub-data group. Here sine wave should be interpreted broadly as a cosine wave is a phase-shifted sine wave and there are other ways to represent a sine wave mathematically, such as but not limited to a series for an approximation, or an infinite series. All these are equivalent as they are able to mathematically represent a circular motion which would be the case for ideal blade trajectory.

The at least one sub-data group can have one or more rotations, but the computation power needed to fit a sine wave for each rotation is not great and thus it is preferred to do a fit for each rotation, i.e. each sub-data group will only contain a single rotation as many variables is removed by a fit for each rotation such as changes to rotation speed or blade pitch angle.

In an aspect, the sine wave may be fitted to each sub-data group. Thereby measurements performed at various time periods can be compared. Furthermore, depending on the number of rotations forming the sensory data of the sub-data group, the fitting of the sine wave enables various of unknown time-dependent variables to be controlled as the time for 10 to 20 rotations is about a minute depending on the wind speed. Thus, if each sub-data group has a low number of rotations such as 1-10 rotationss, or 1-7 rotations, or 1-5 rotations, or more preferred 1-3 rotations or most preferred a single rotation then the risk of the blade pitch angle being changed is low. Likewise, the risk that the wind turbine generator has reacted to a change in wind speed or direction is likewise lows.

In an aspect, the step of determining may include a step of computing a standard deviation between the at least one of the sub-data groups and the wave function. In some cases, the standard deviation can be so large that it is possible to make a simple threshold rule which concludes that the swept area or part of the swept area by the blade is in wake.

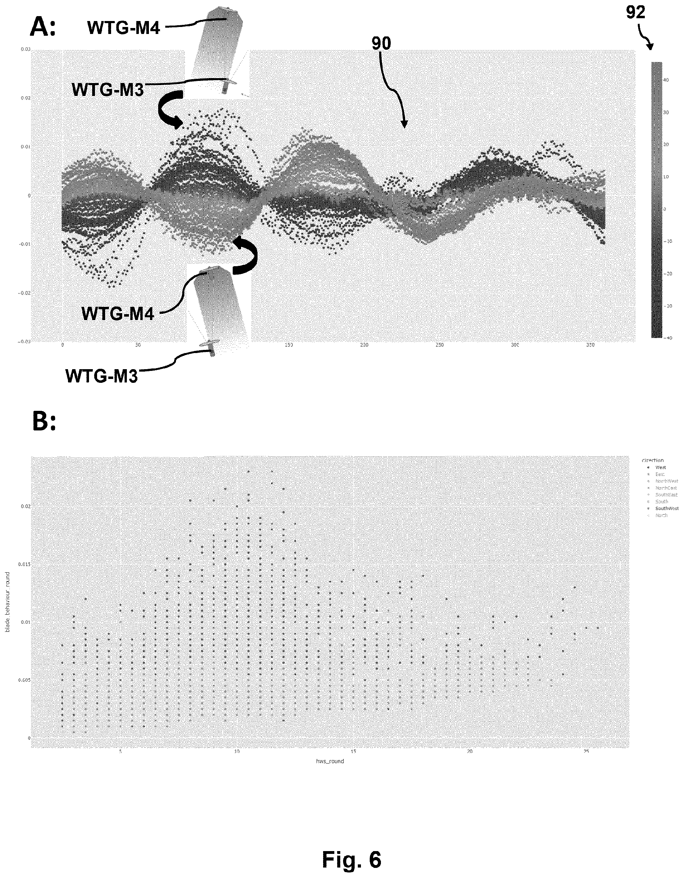

In an aspect, the step of determining may include a step of subtracting the sub-data groups and the wave function. This is a simple arithmetic step which reveals wake conditions without a need for much computation power. The result of this step is shown in figure 6A and the graph clearly shows that for some rotations a large deflection relative to the ideal blade trajectory is identified.

In an aspect, spectral analysis may be performed on the subtracted data from the step of subtracting. This will enable further analysis of the blade trajectory and thus the blade behavior during large bending, twisting or the like. This will further reveal wear of the blade as it is expected that wear will change the behavior of the blade when the blade is bent or twisted or otherwise displaced from an intended shape.

In an aspect, the method may be performed in real-time during normal operation. The reduced required computation power enable that the method can be performed in real-time thereby enabling adjustment of the wind turbine generator or to adjust one or more upstream wind turbine generators such that wake conditions are made less severe which will cause less wear on the wind turbine generator and in some cases the global power production of all the wind turbine generators may be increased.

An object of the invention is achieved by a data processing unit for determining wake conditions at a wind turbine generator, the data processing unit comprising
- a communication module adapted for communication with an accelerometer installed in a wind turbine blade, and
- a computation unit comprising at least one processor and at least one memory that includes program code, wherein the memory and the program code is configured to cause the processor to execute the steps of the method according to any one or of the embodiments described above.

Thereby, the control system can determine wake conditions at a wind turbine generator using the blade or blades of the wind turbine generator. Thereby, the blade of the wind turbine generator becomes a very large wake detector. The data processing unit may perform the method for each blade independently. This will enable a wake measurement each 1/3 rotor rotation for the common wind turbine generator having three blades.

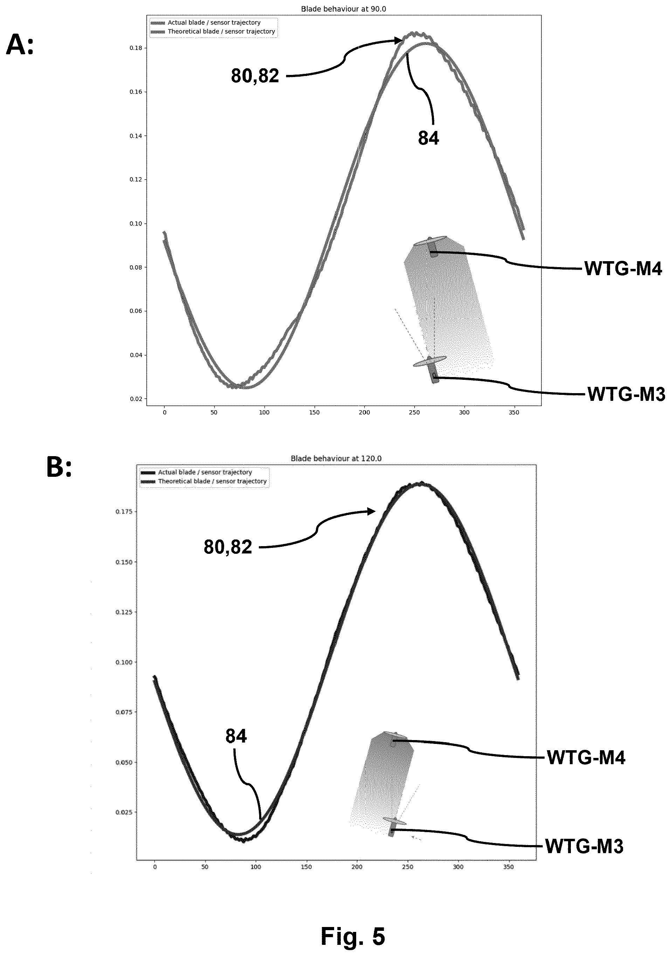

The communication module may be adapted for communication with a wind speed sensor for receiving a wind speed at the wind turbine generator, however this method will function independently of the wind speed as can be seen in figure 5B, showing a standard deviation from a sine wave as a function of rotations per minute of the rotor. There is a high correlation between wind speed and rotations per minute, thus an equivalent graph with wind speed along the second axis would be similar to figure 5B.

The data processing unit may be part of the wind turbine generator or be external to the wind turbine generator.

The communication module may communicate with one or more accelerometers installed in a wind turbine blade or blades. The method and thus the data processing unit works with sensory data from a single accelerometer, but it is expected that an increase in sensory data can improve the method.

In an aspect, the communication module may be in wired or wireless communication with the accelerometer.

In an aspect, the data processing unit may be configured to send an alarm or stop a signal to a wind turbine generator or an operator as a function of a wake threshold value.

The wake threshold value may be set based on design of the wind turbine generator or by an operator of the wind turbine generator. The operator may set the wake threshold value such that the expected lifetime of the wind turbine generator is 20 years, or 25 years, or 30 years, or at other lifetimes.

Thus, in the case where the wind turbine generator is experiencing a wake above the threshold value then the wind turbine generator is stopped or restricted in operation to reduce wear. This may include changing the blade pitch angle.

In an aspect, the data processing unit may be configured to send and/or present actual wake data and historical wake data for a wind turbine operator to be able to compare present and past wake situation.

An object of the invention is achieved by a wind turbine generator comprising
- a blade comprising an accelerometer;
- a data processing unit as described in one or more of the previous embodiments.

Thereby, the wind turbine generator will be able to determine wake conditions by computing the blade behaviour of the blade of the wind turbine generator. It is only necessary that one blade comprises an accelerometer sensor, however all blades may comprise an accelerometer. Accelerometers are readily available today and are compared to LiDARs much cheaper and the accelerometers will collect data of how the wind affects the blade instead of just the approaching wind which can be monitored by a LiDAR or a met mast.

Furthermore, the amount of computation power needed to calculate wake from a LiDAR is much greater than the computation power needed for the method as previously mentioned.

An object of the invention is achieved by a wind turbine park comprising a plurality of wind turbine generators, wherein
- at least one of the plurality of wind turbine generators is a wind turbine generator as previously described in one or more embodiments; and/or
- the wind turbine park comprises a data processing unit as previously described in one or more embodiments in communication with an accelerometer on a blade of a wind turbine generator.

Thereby, the local wake conditions on a blade can be determined.

In an embodiment, 2, or 5, or 10, or 20, or 50, or all the plurality of wind turbine generators, are wind turbine generator as previously described having a data processing unit, thereby each of these wind turbine generators can be used for mapping the wake conditions of the wind turbine park.

In an embodiment, the data processing unit is in communication with a plurality of blades on different wind turbine generators, where each of the plurality of blades comprises at least one accelerometer positioned radially along the blades. The plurality of blades may be 5 blades, 10 blades, 20 blades, or 50 blades, or more blades, or all blades of the wind turbine park. Thereby, each of these blades can be used for mapping the wake conditions of the wind turbine park.

In an embodiment, each wind turbine generator of a plurality of wind turbine generators comprises a blade comprising at least two position sensors positioned radially along the blade, and the data processing unit is in communication with the position sensors, thereby enabling mapping of the wake conditions of the wind turbine park.

In an aspect, the data processing unit may further configured to control one or more of the wind turbine generators of the wind turbine park as a function of the wake conditions of the at least one of the wind turbine generators.

The power loss due to wake can be severe and, in many cases, the upstream wind turbine generator or generators can be perturbed, which will lead to a power loss of the upstream wind turbine generator or generators, however the power loss is more than compensated by the increased power of the downstream wind turbine generator.

### Description of the Drawing

Embodiments of the invention will be described in the figures, whereon:
Fig. 1 illustrates a wind turbine generator;
Fig. 2 illustrates an accelerometer and dimensions of a wind turbine blade;
Fig. 3 illustrates a map around the wind turbine generator (M3) tested using the method according to the invention and a power generation graph;
Fig. 4 illustrates sensory data from three channels of an accelerometer installed on the wind turbine generator (M3);
Fig. 5 illustrates two measurements of two different rotations where the wind turbine generator (M3) is affected by wake conditions;
Fig. 6 illustrates difference between fitted sine waves and sensory data of a plurality of rotations, and a graph showing standard deviations as a function of rotations per minute;
Figs. 7-79 illustrate sensory data measured at wind turbine generator (M3) divided into 5-degree sections; and
Fig. 80 illustrates a method for determining wake conditions at a wind turbine generator (WTG) by measuring blade deflection from an ideal blade trajectory.

**Detailed Description of the Invention**

| **Item** | **No** |
|---|---|
| Wind turbine generator | WTG |
| Edgewise channel | 1 |
| Spanwise channel | 2 |
| Flapwise channel | 3 |
| Wind turbine tower or tower | 10 |
| Nacelle | 12 |
| Rotor | 14 |
| Wind turbine blade or Blade | 16A, 16B, 16C |
| Angular blade position points | 18 |
| Accelerometer | 20 |
| | |
| Data processing unit | 30 |
| Communication module | 32 |
| Computation unit | 34 |
| | |
| Sensory data | 80 |
| Sub-data groups | 82 |
| Wave function | 84 |
| Wake conditions | 90 |
| Yaw misalignment | 92 |
| Method | 100 |
| Measuring | 200 |
| Dividing | 300 |
| Determining | 400 |
| Computing | 410 |
| Subtracting | 420 |

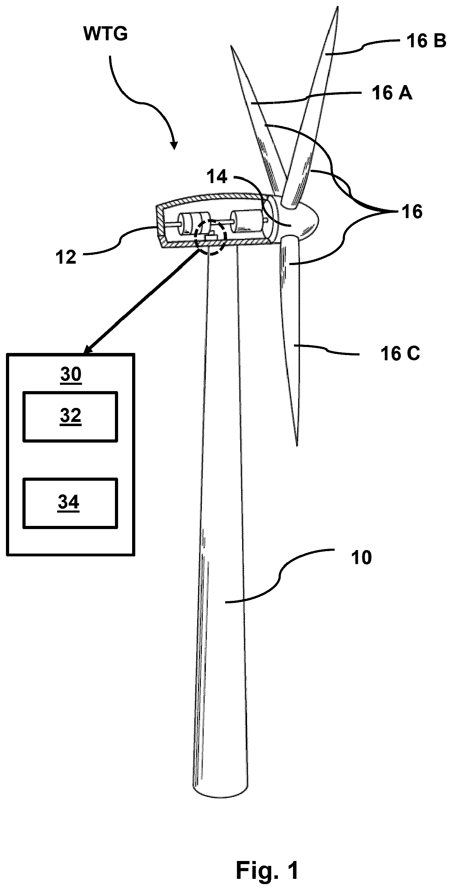

Fig. 1 illustrates a wind turbine generator WTG. The wind turbine generator WTG comprises a wind turbine tower 10 with a nacelle 12 and a rotor 14. The rotor 14 is equipped with three blades 16A, 16B, 16C as is most common for wind turbine generators. The wind turbine generator WTG could have another number of wind turbine blades 16.

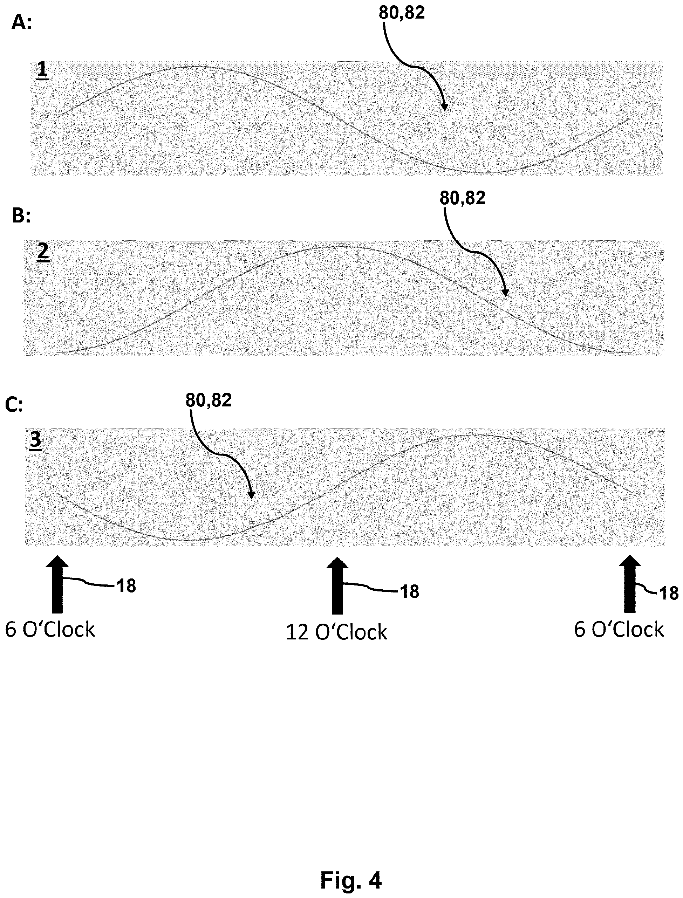

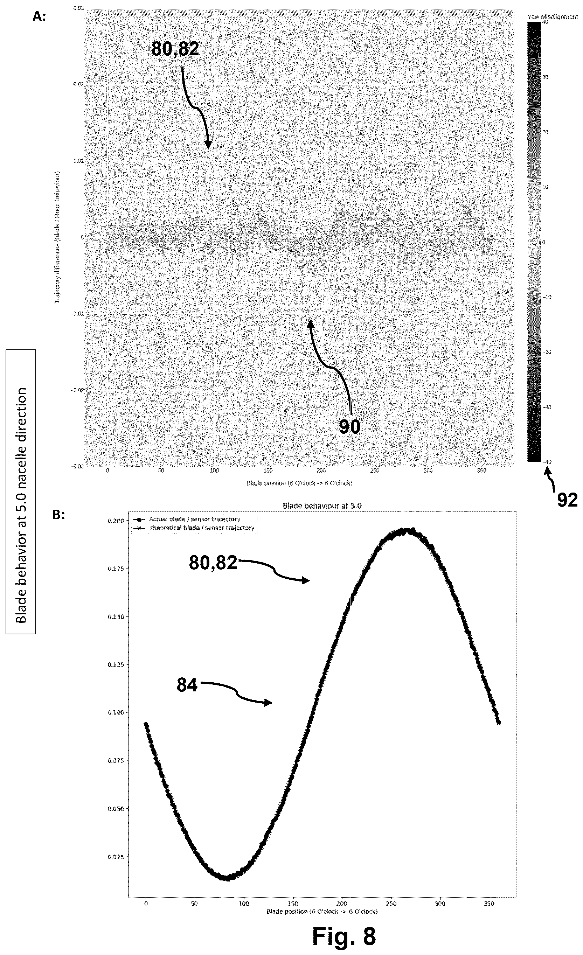

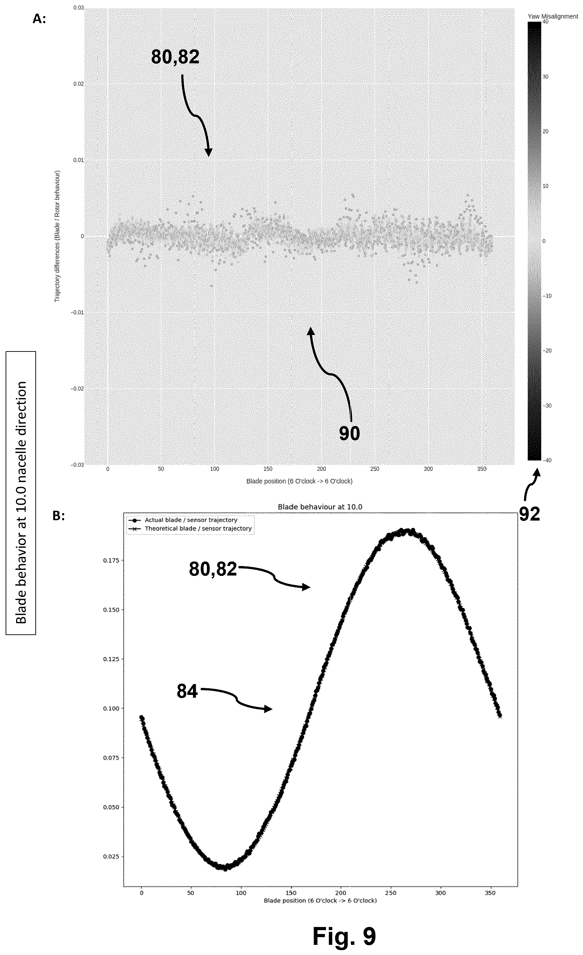

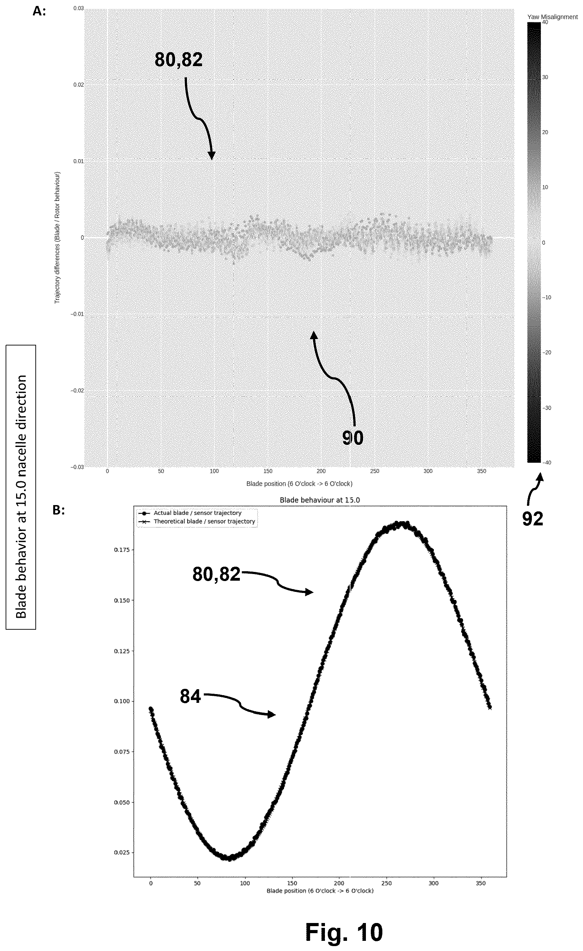

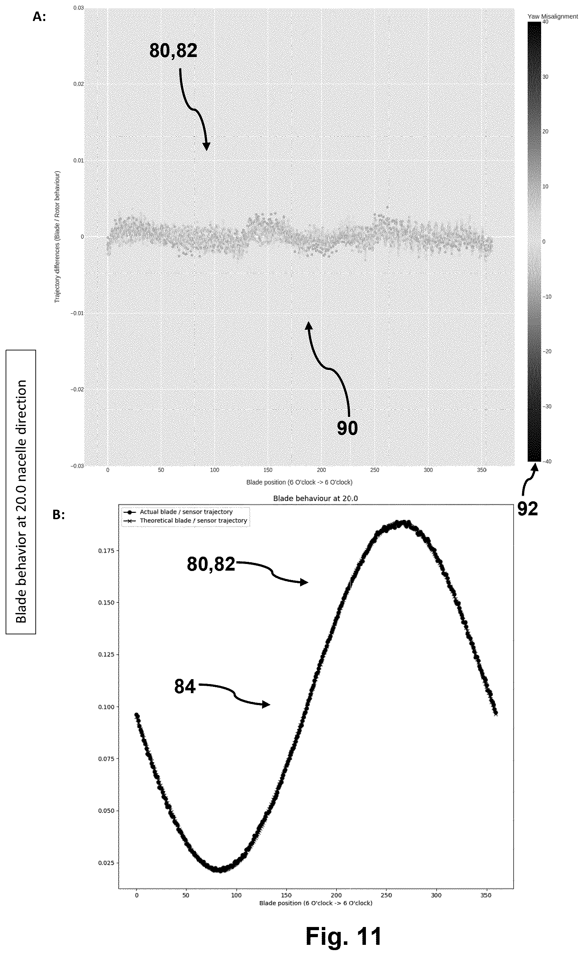

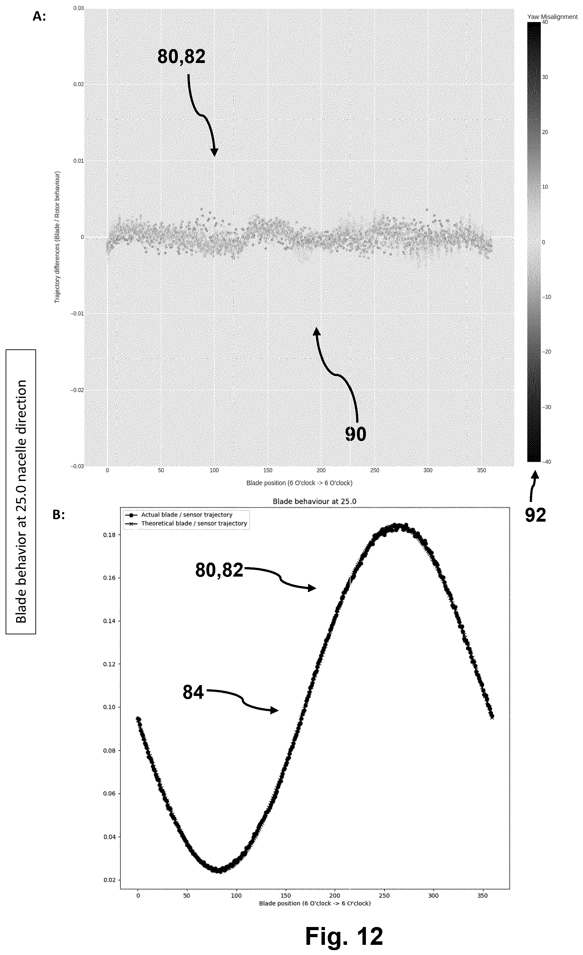

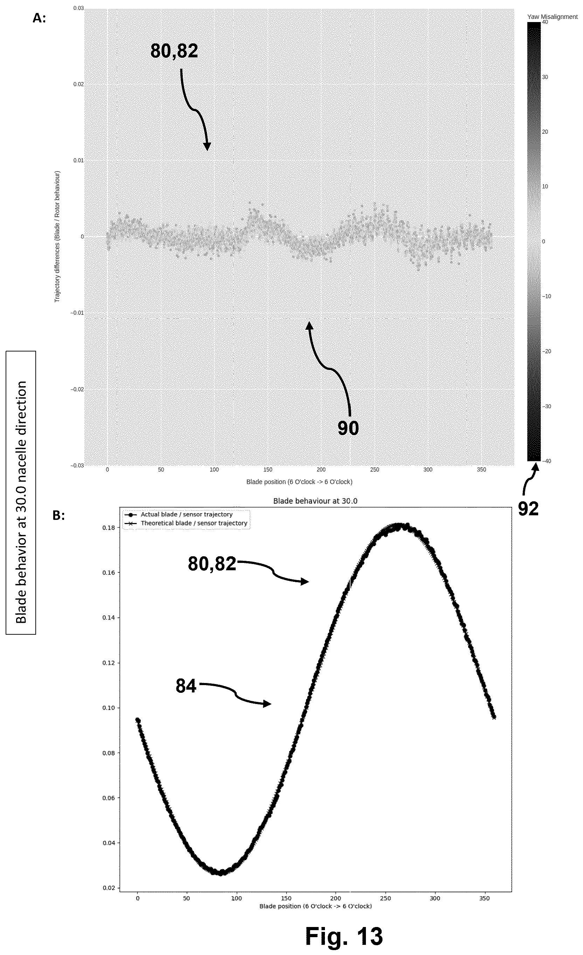

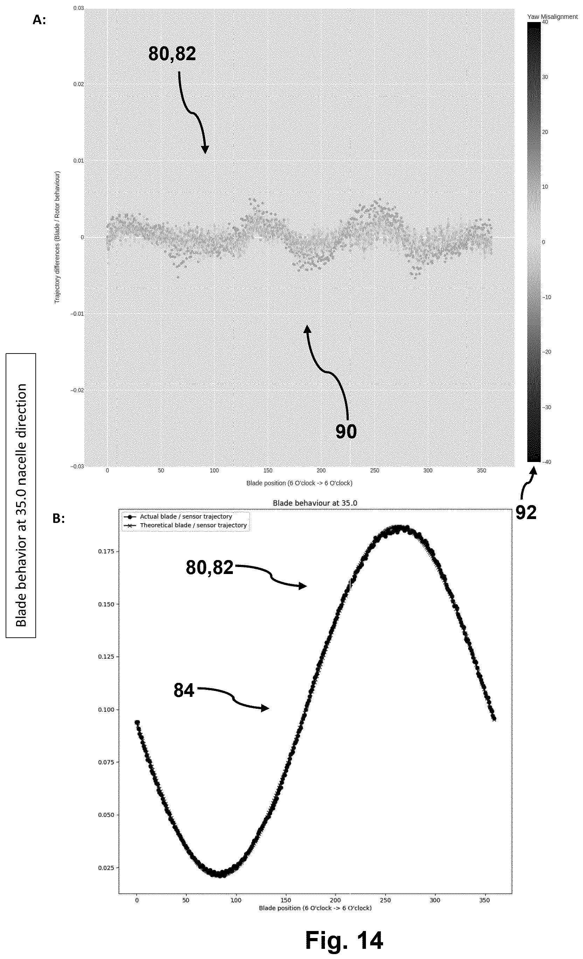

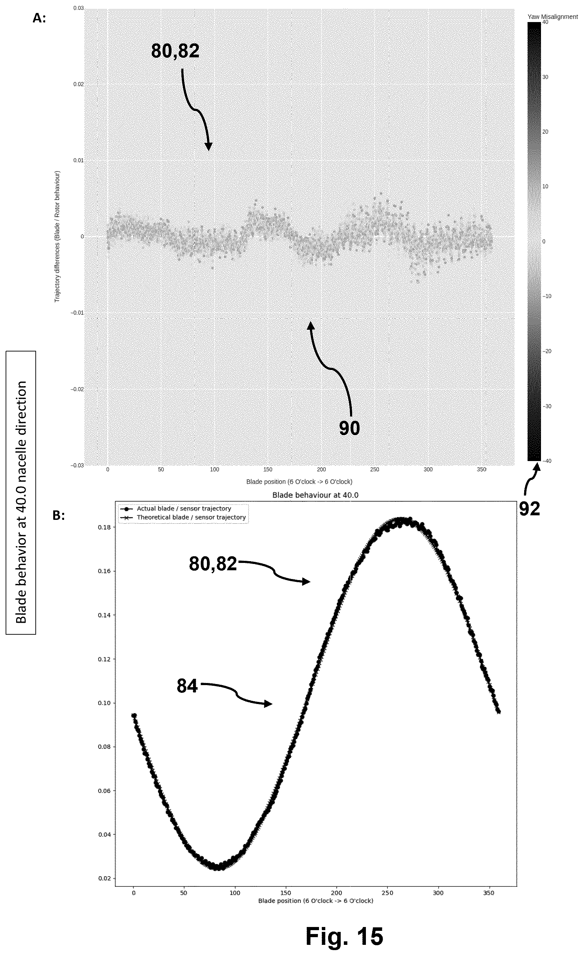

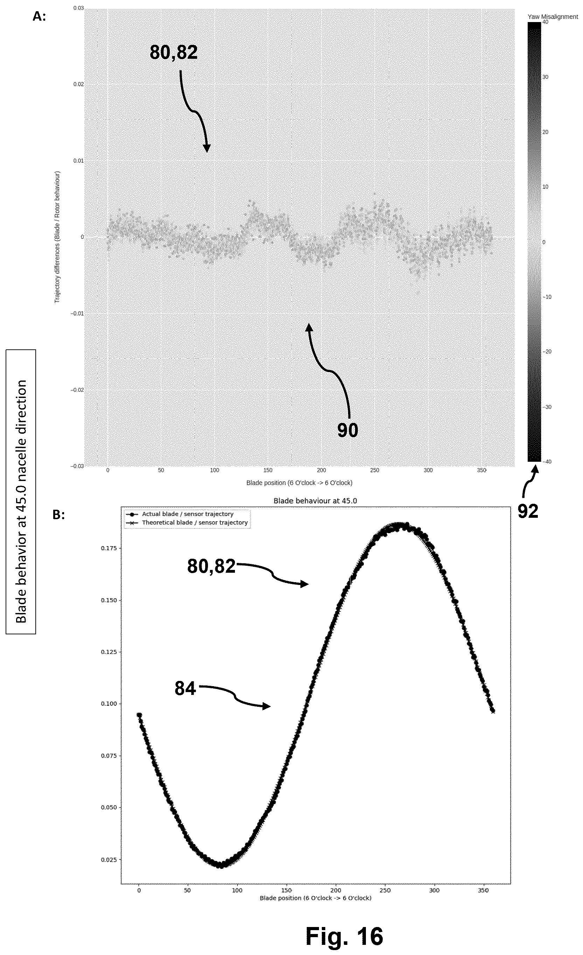

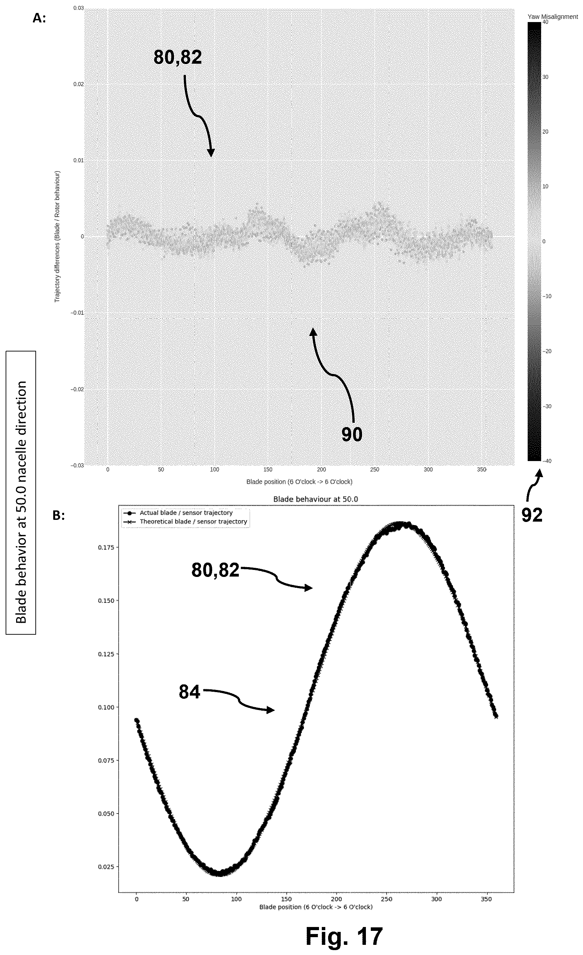

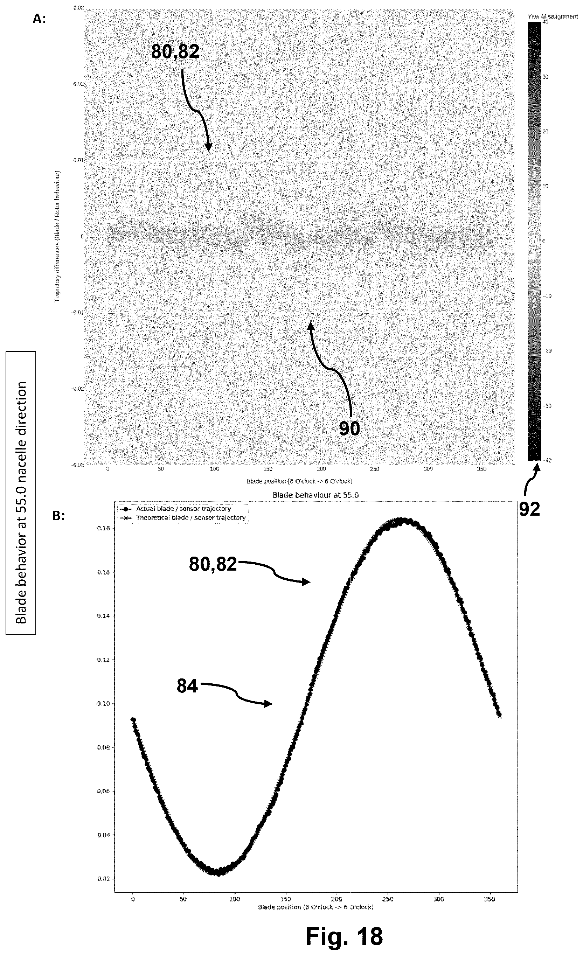

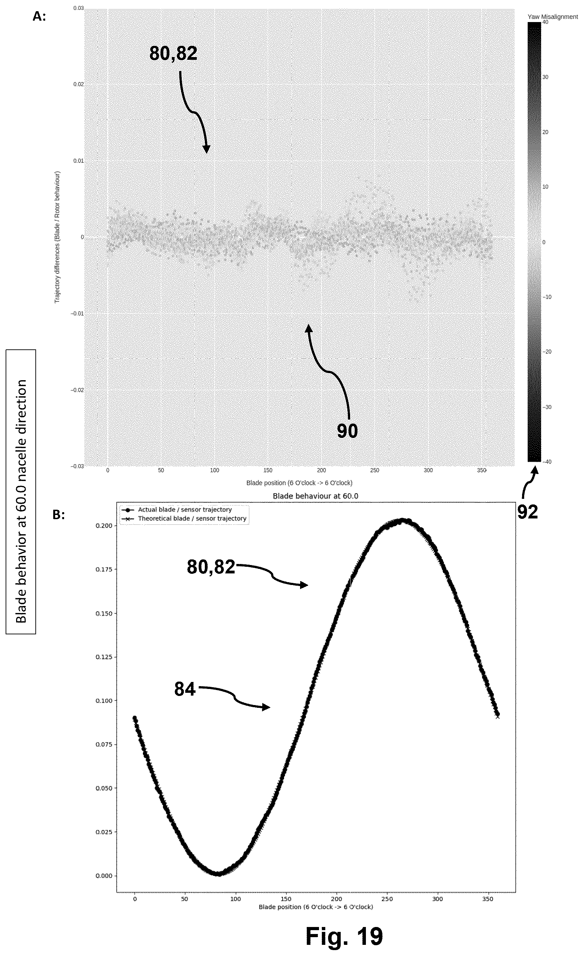

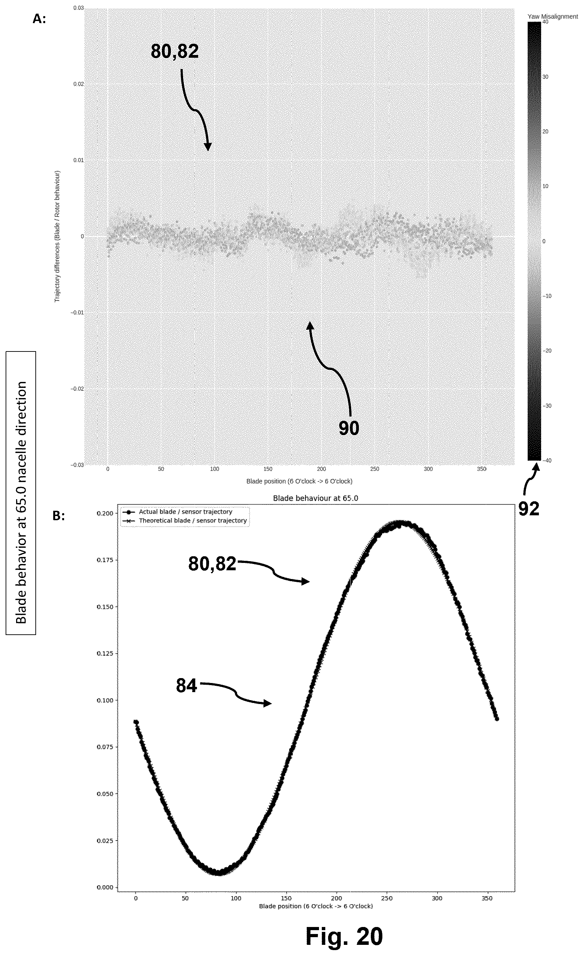

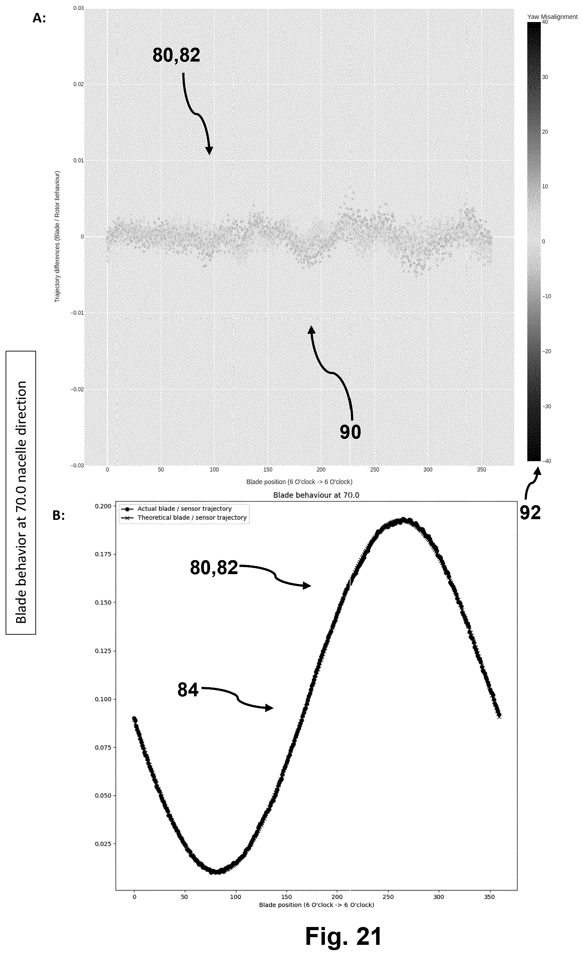

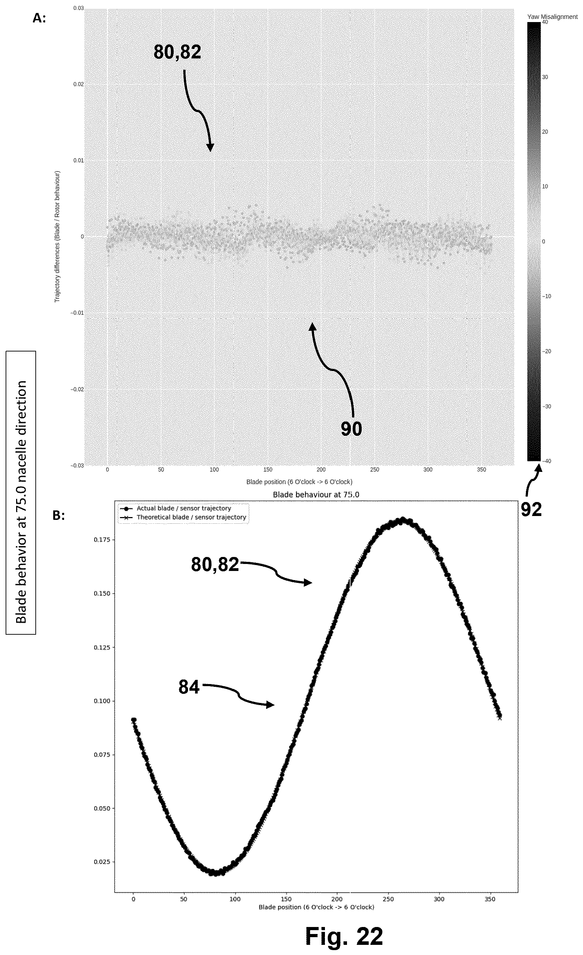

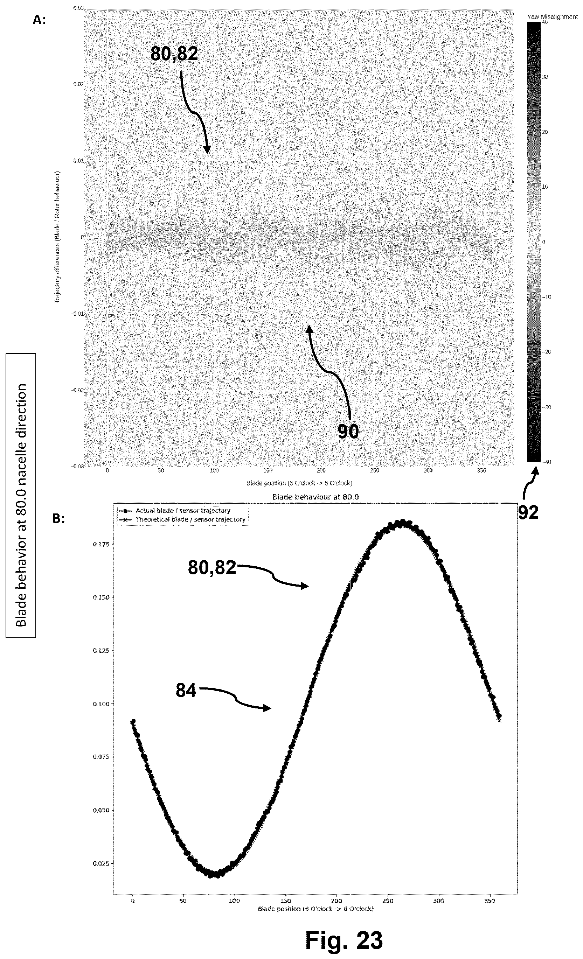

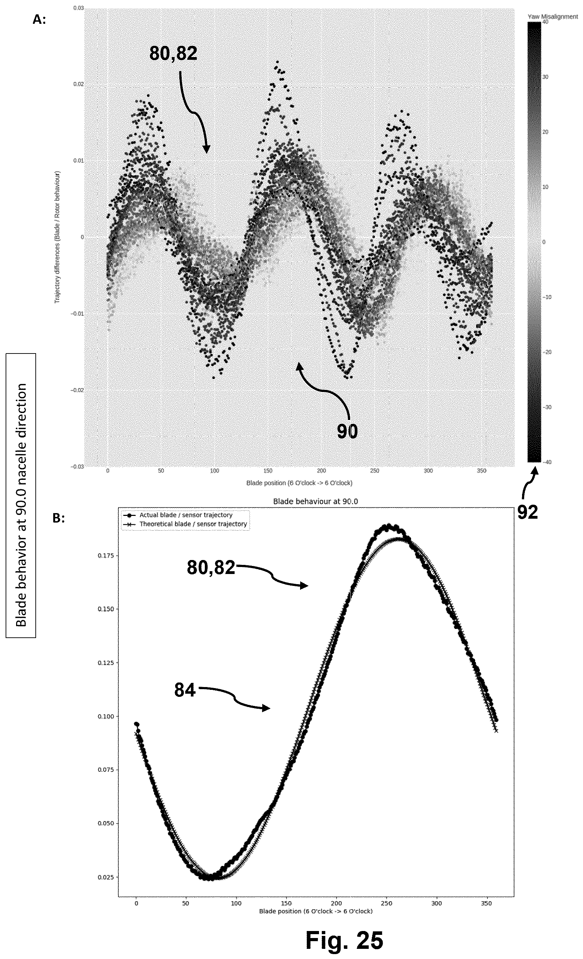

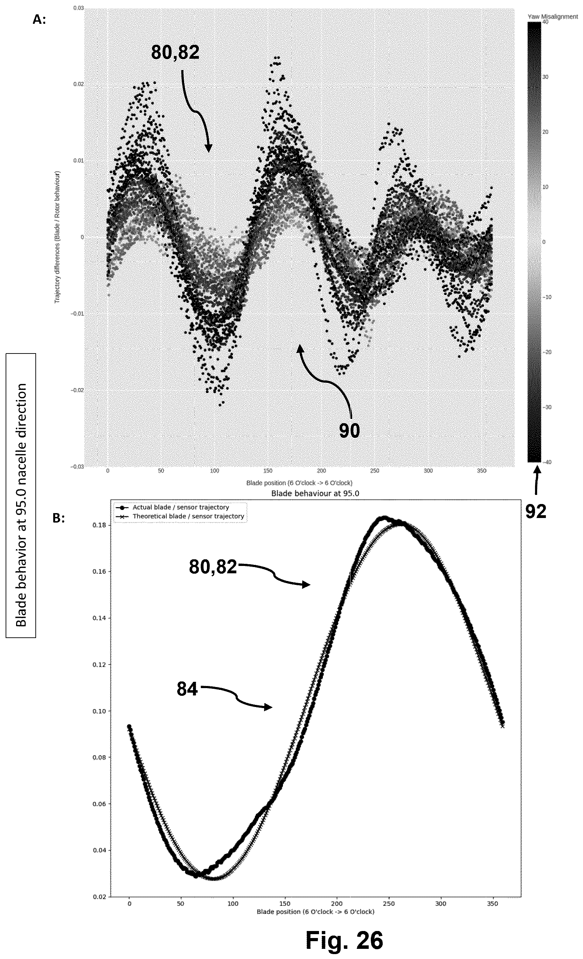

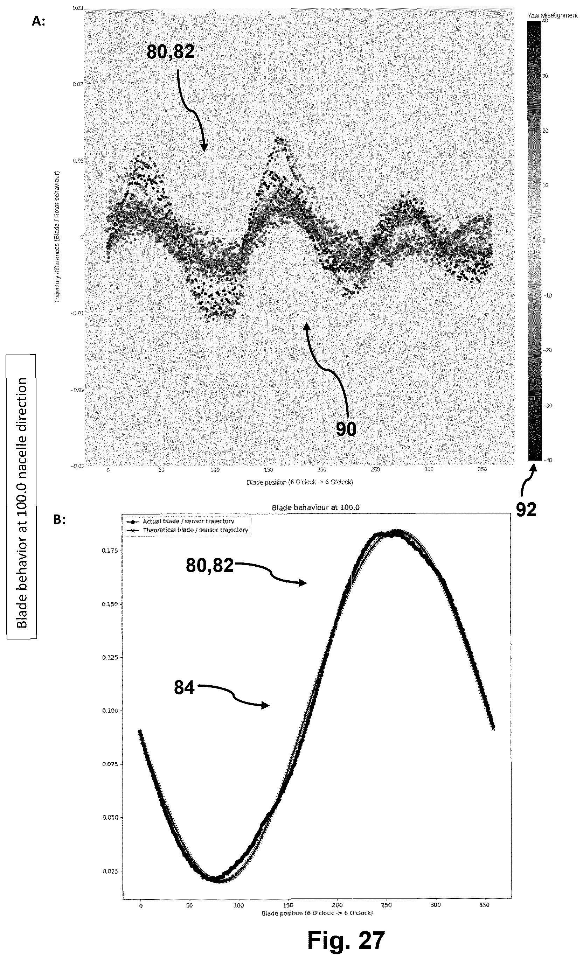

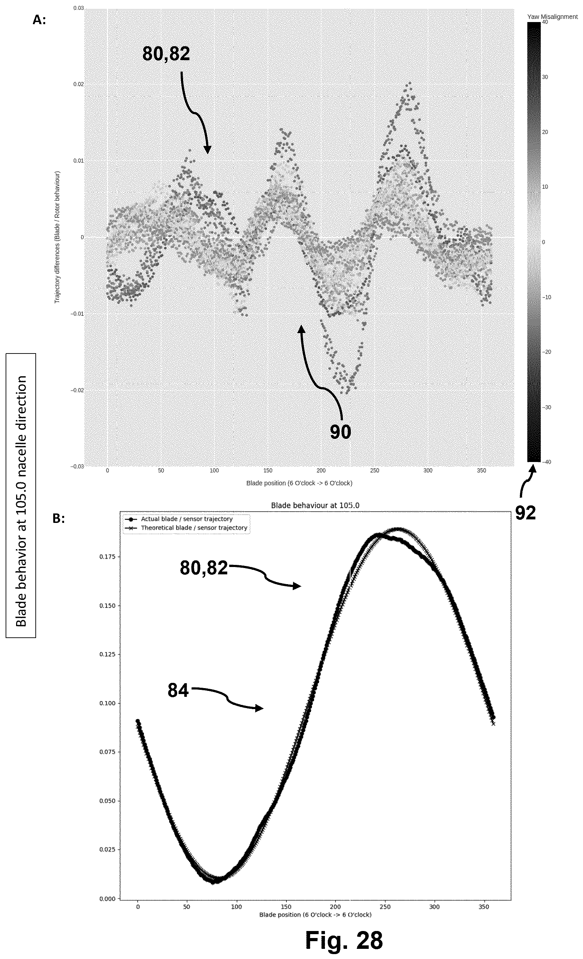

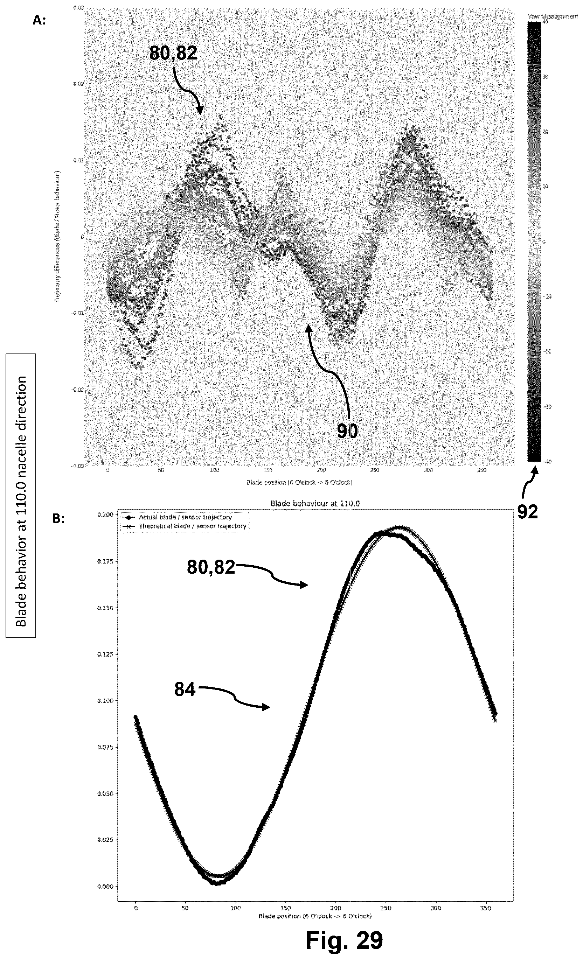

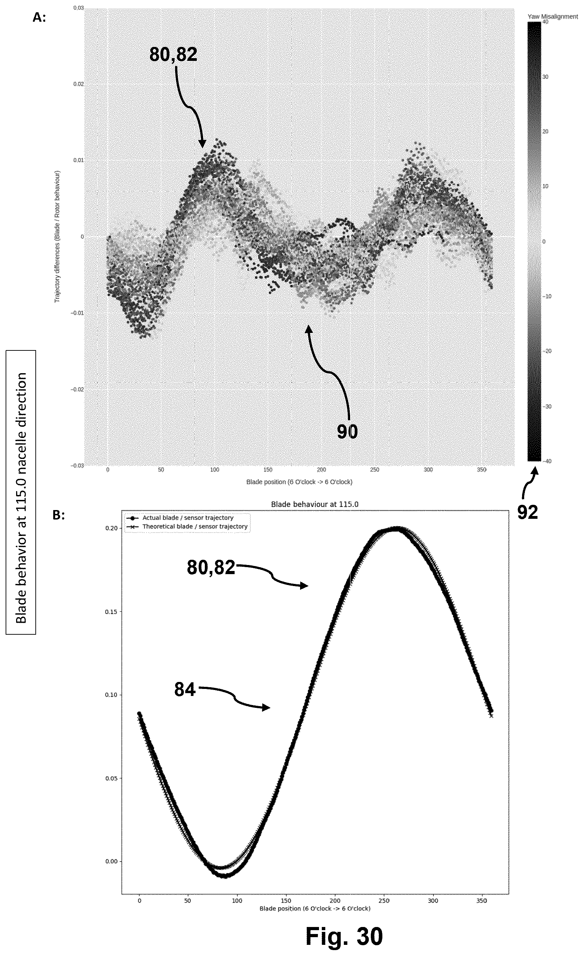

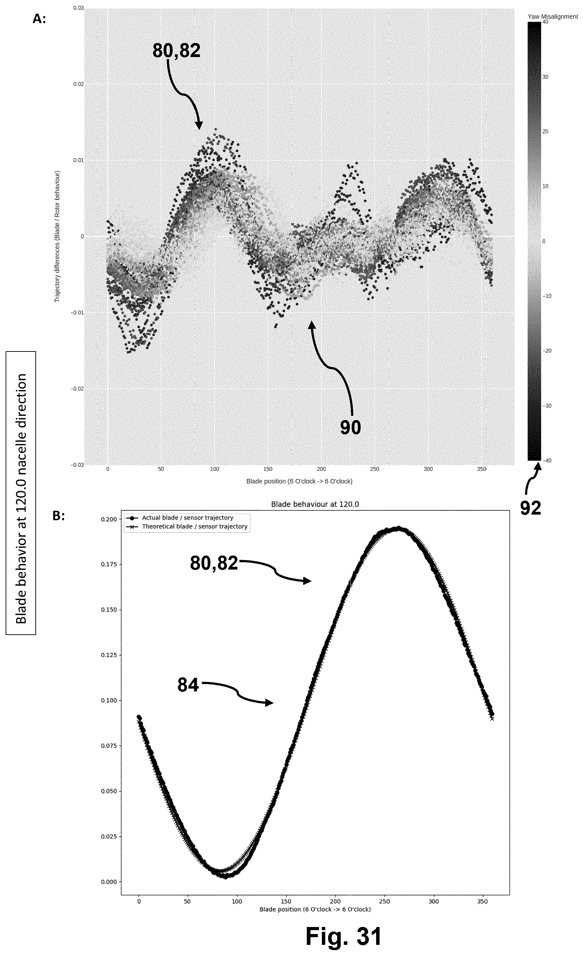

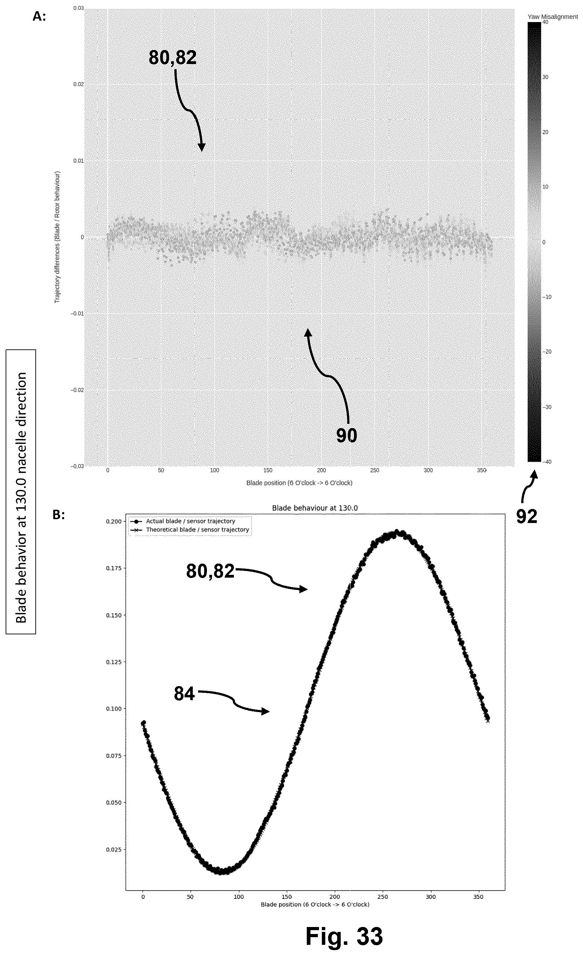

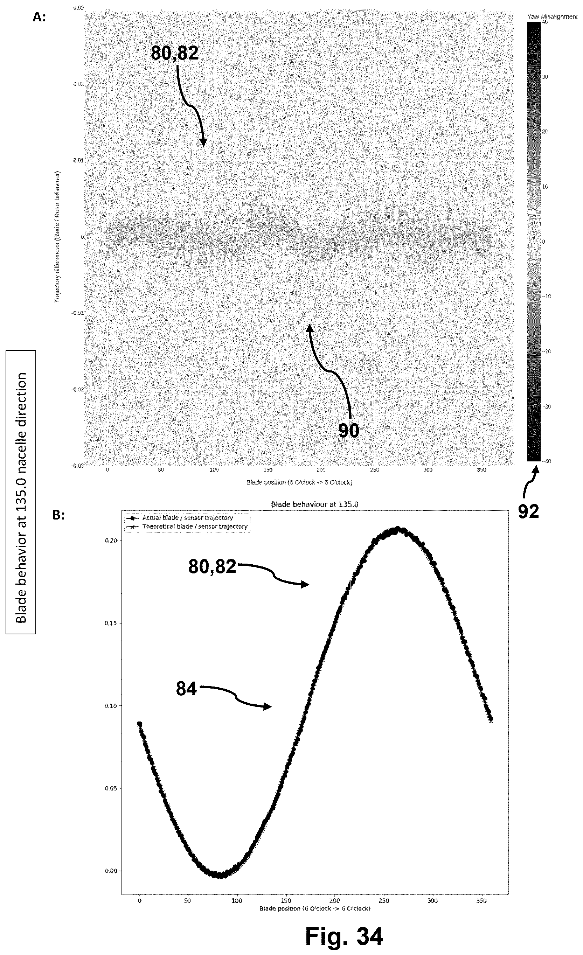

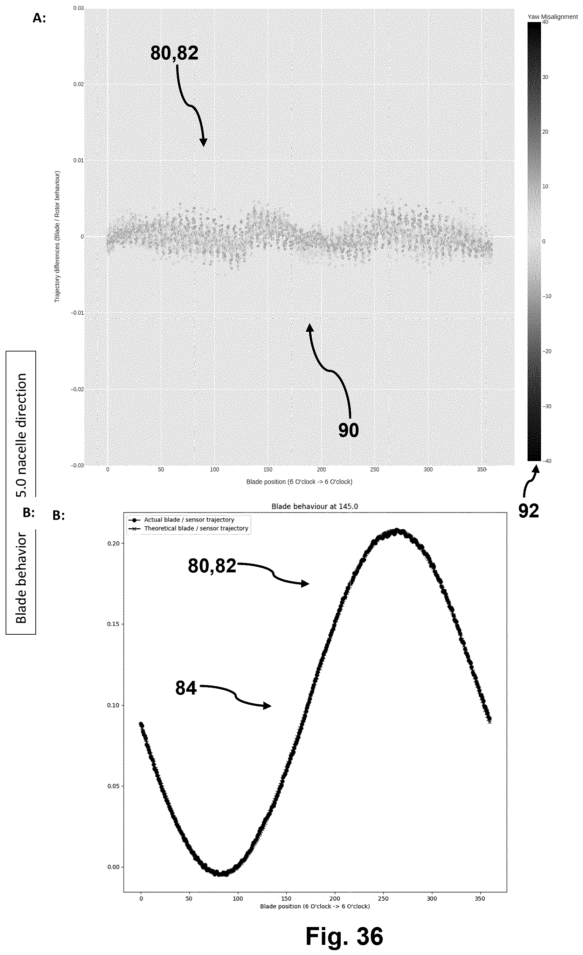

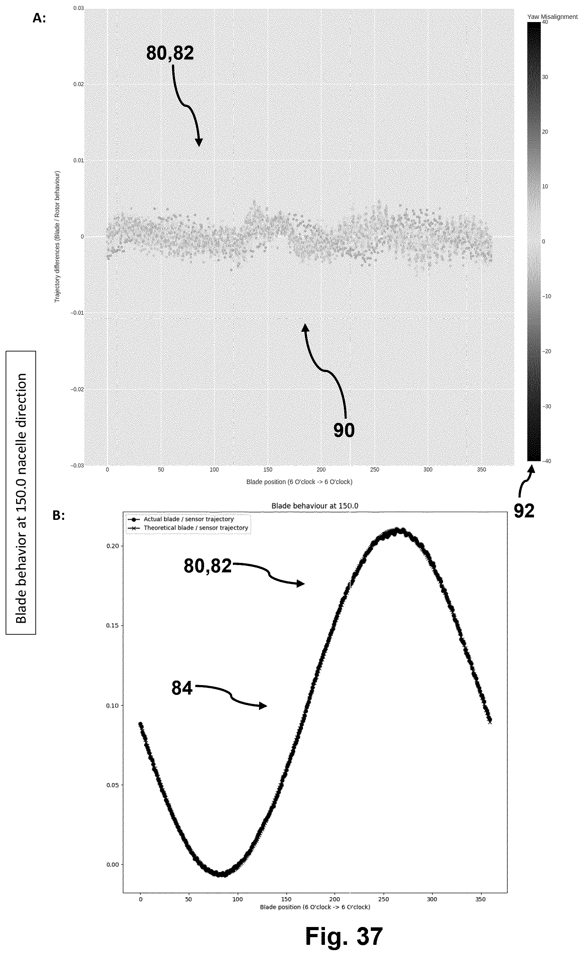

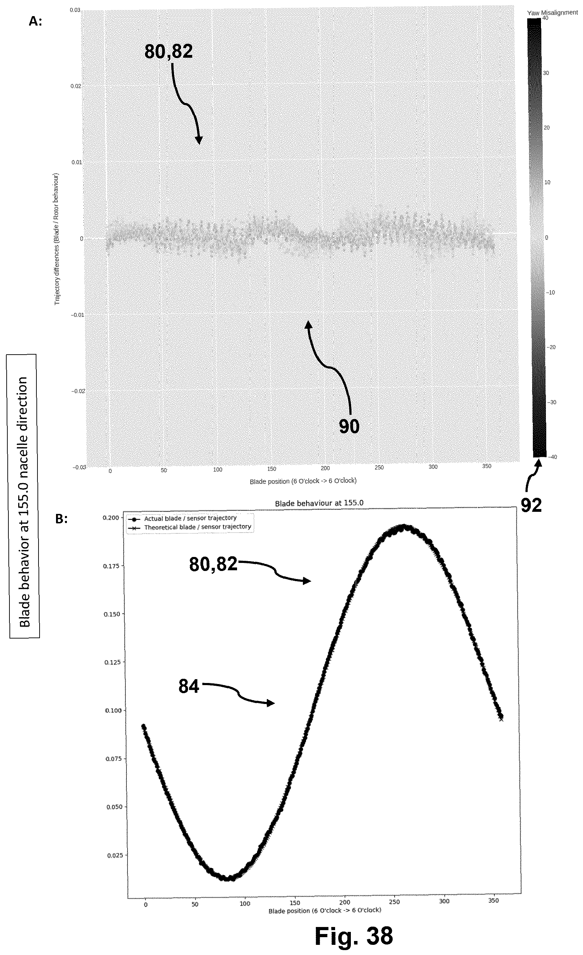

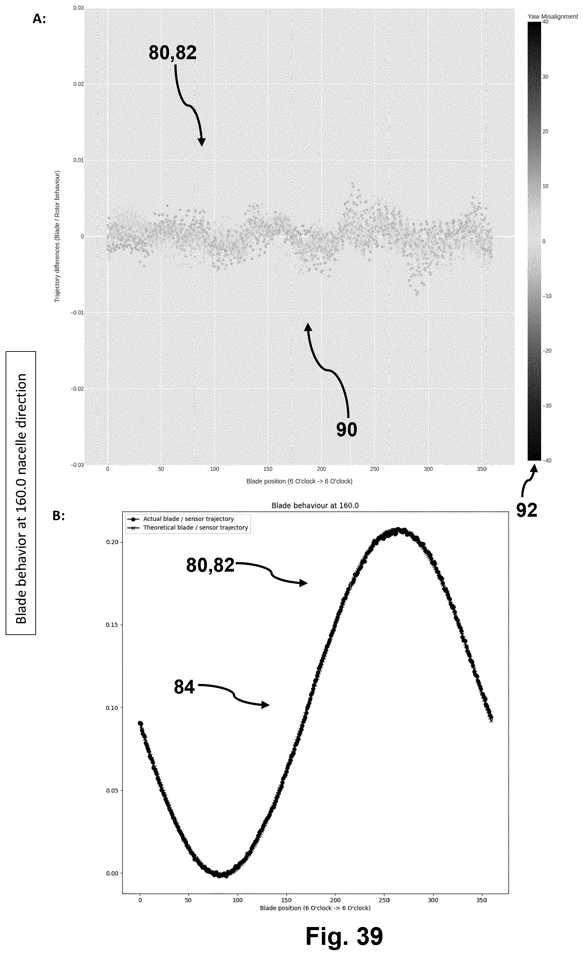

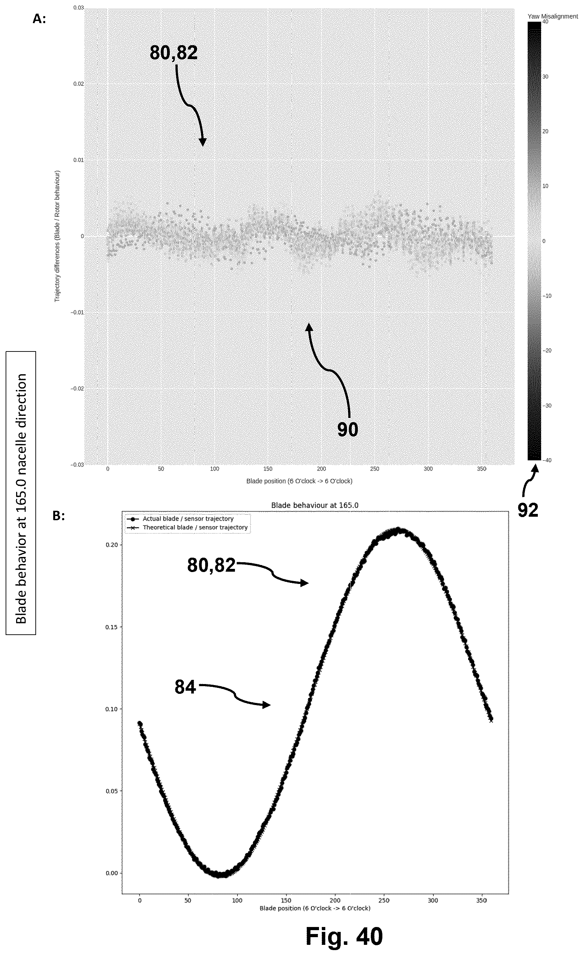

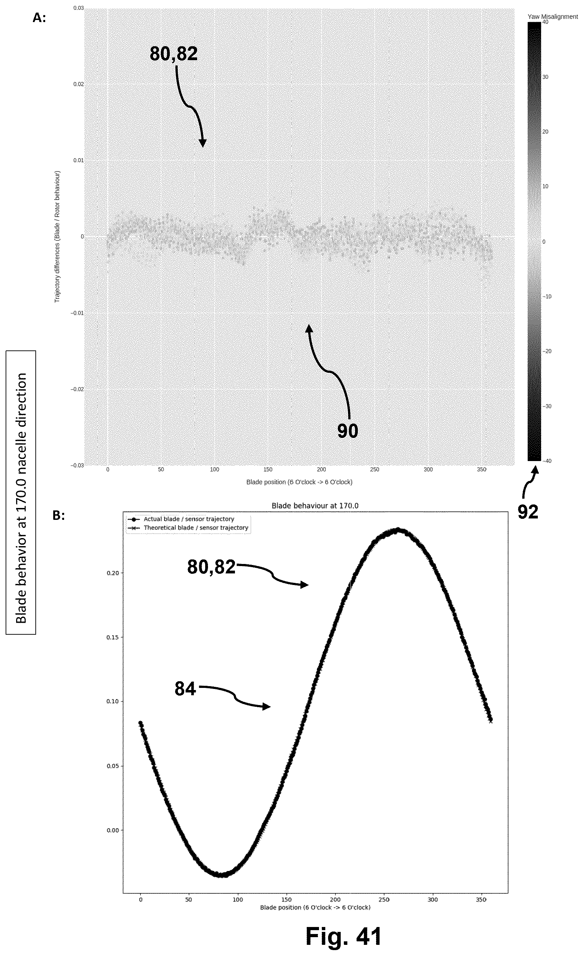

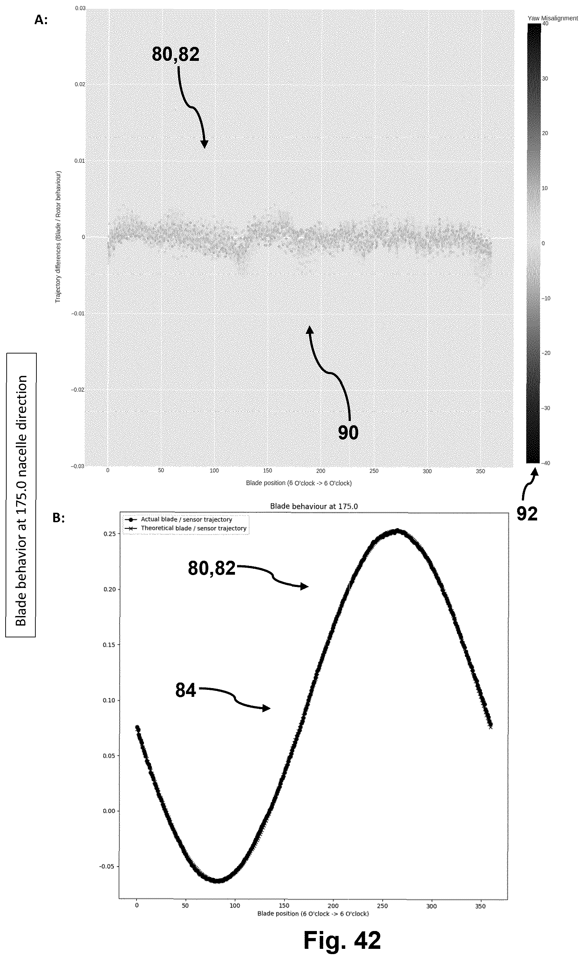

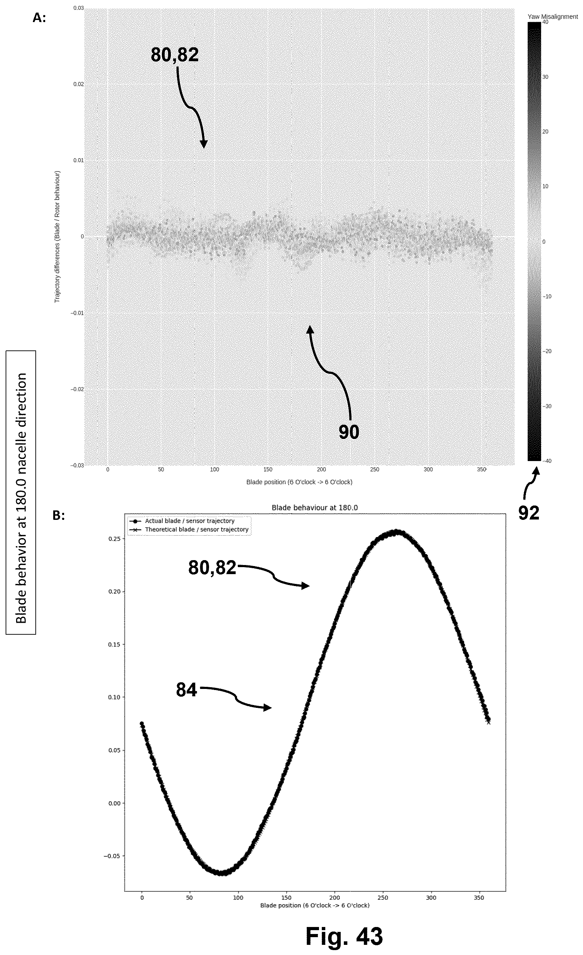

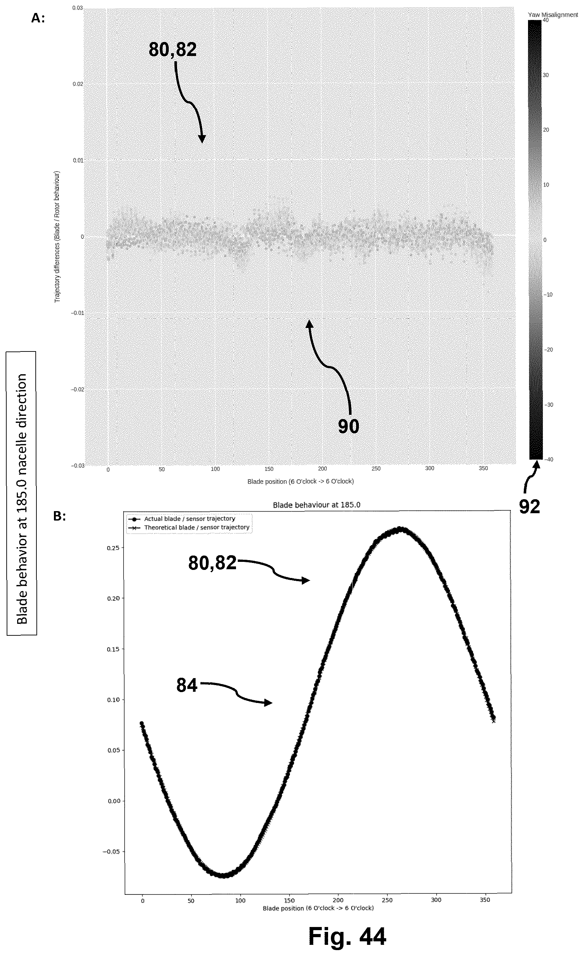

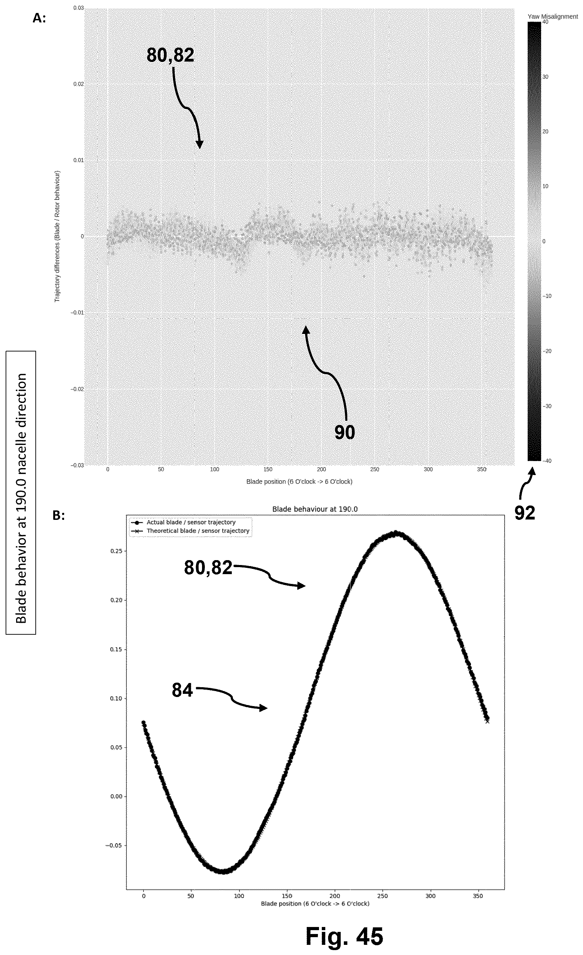

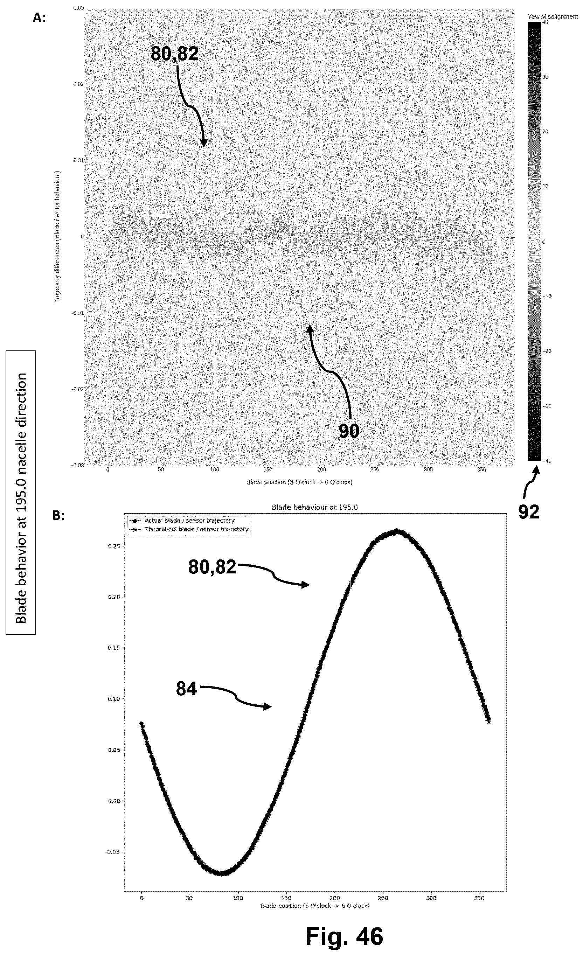

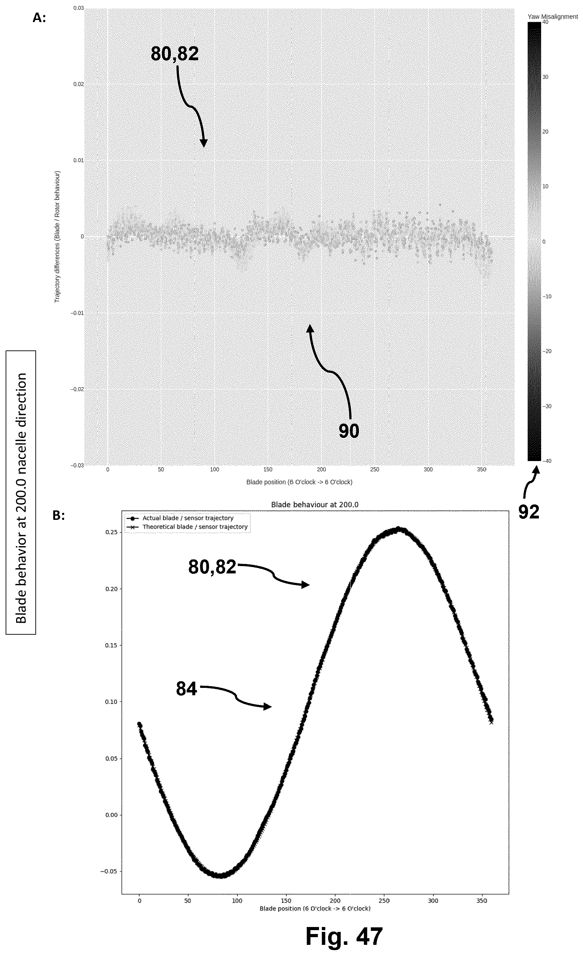

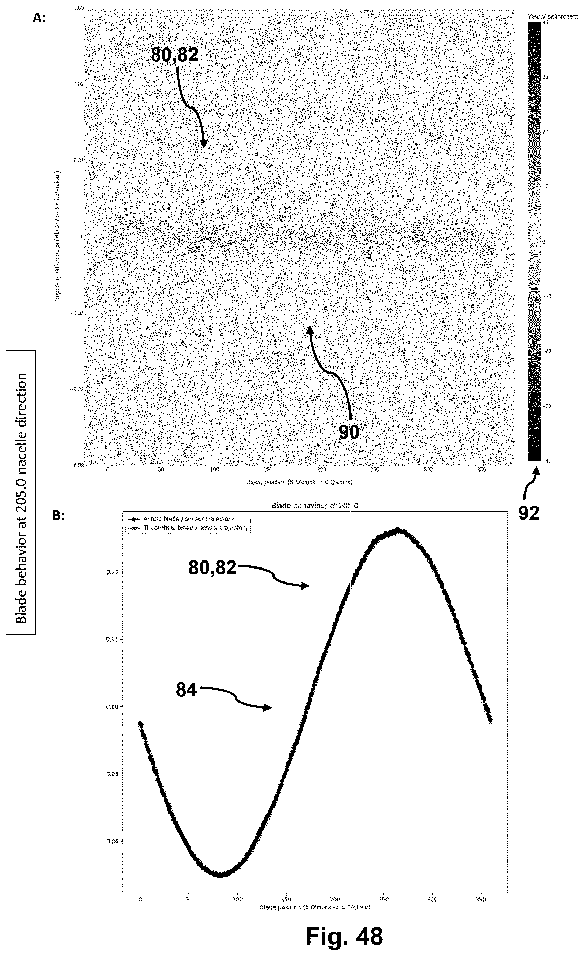

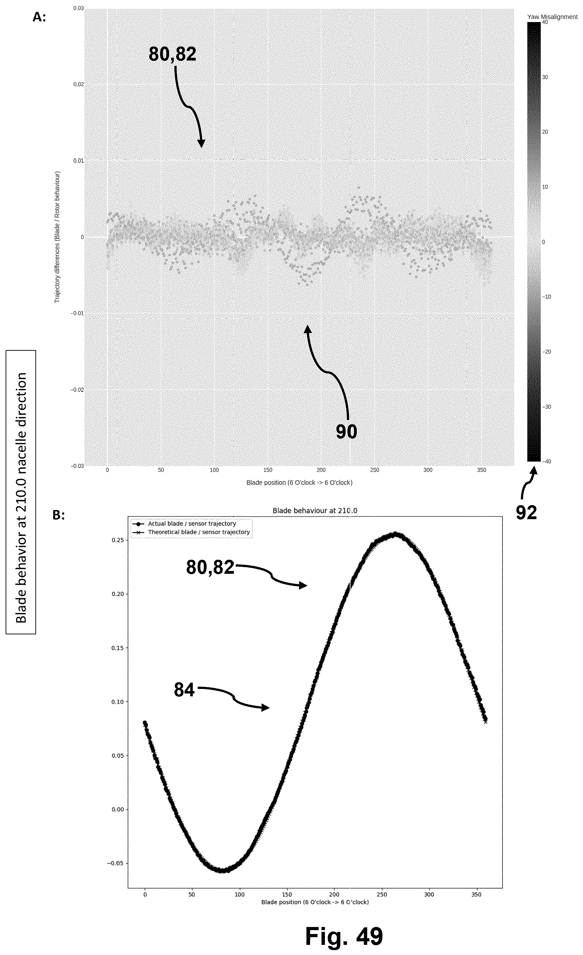

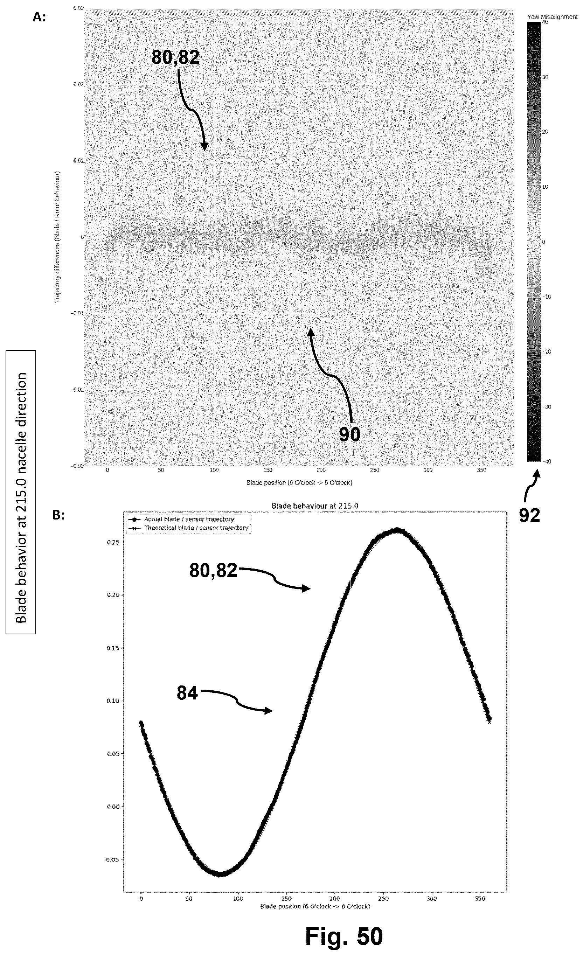

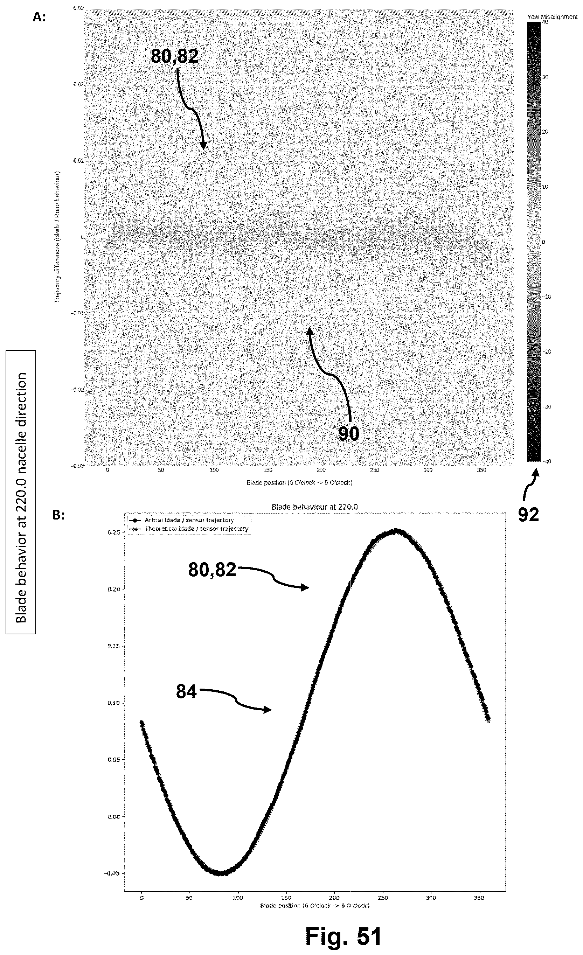

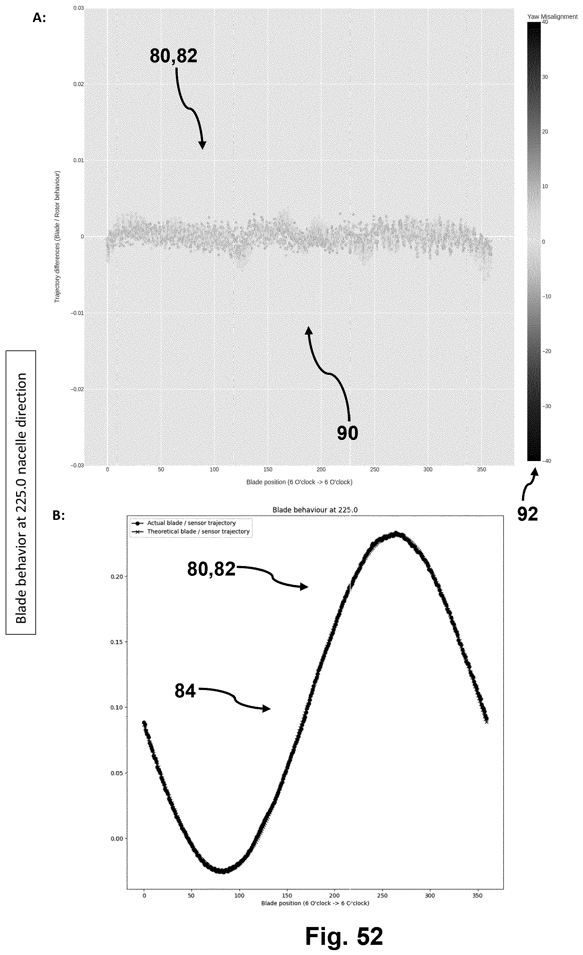

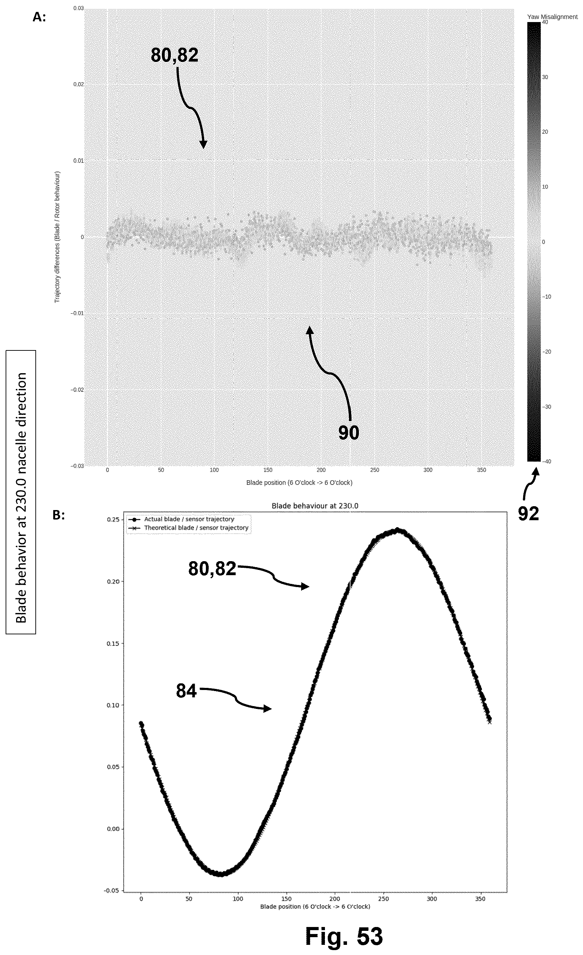

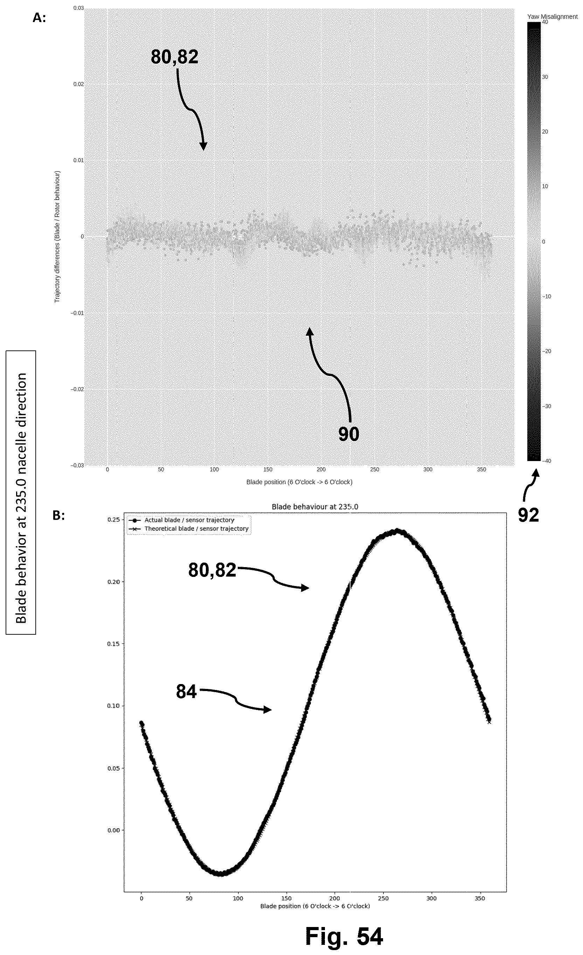

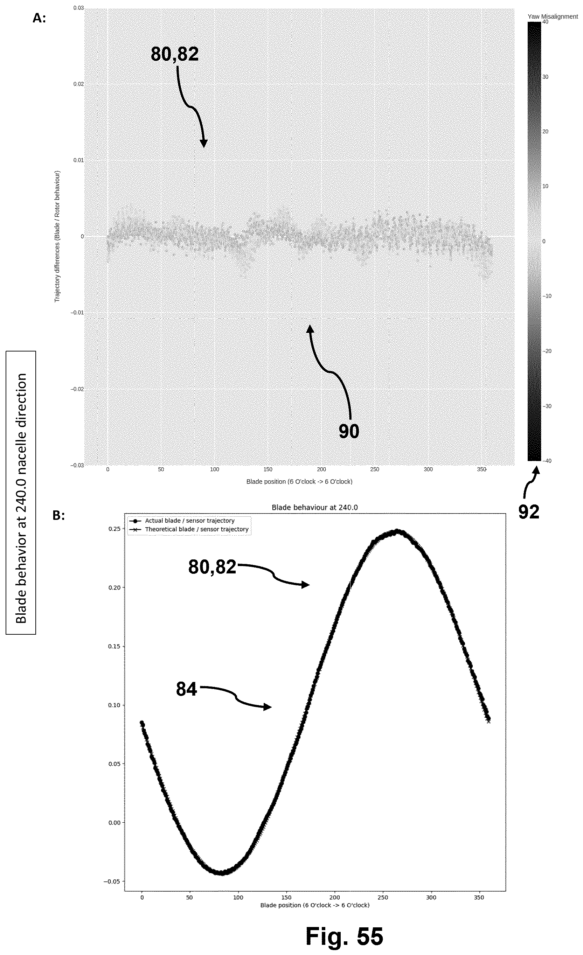

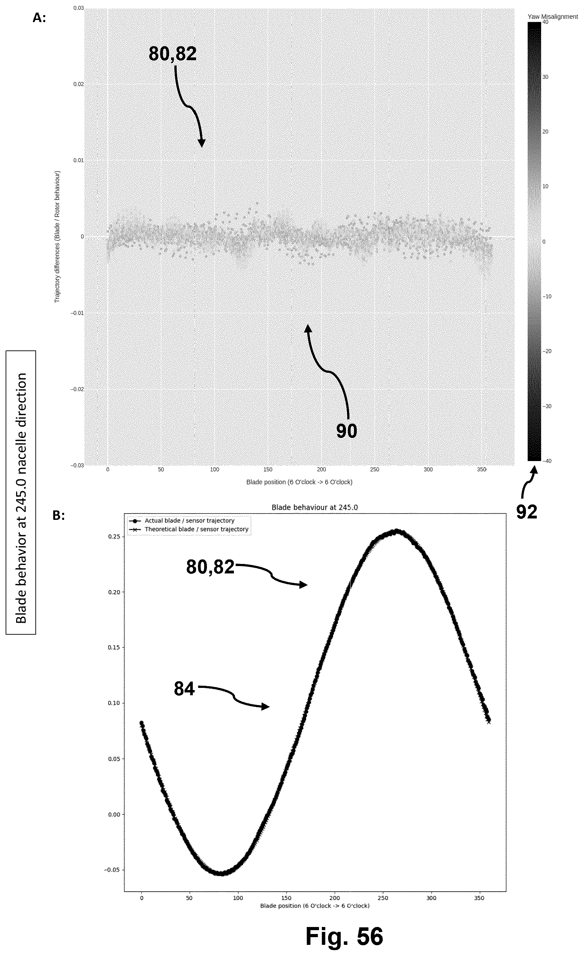

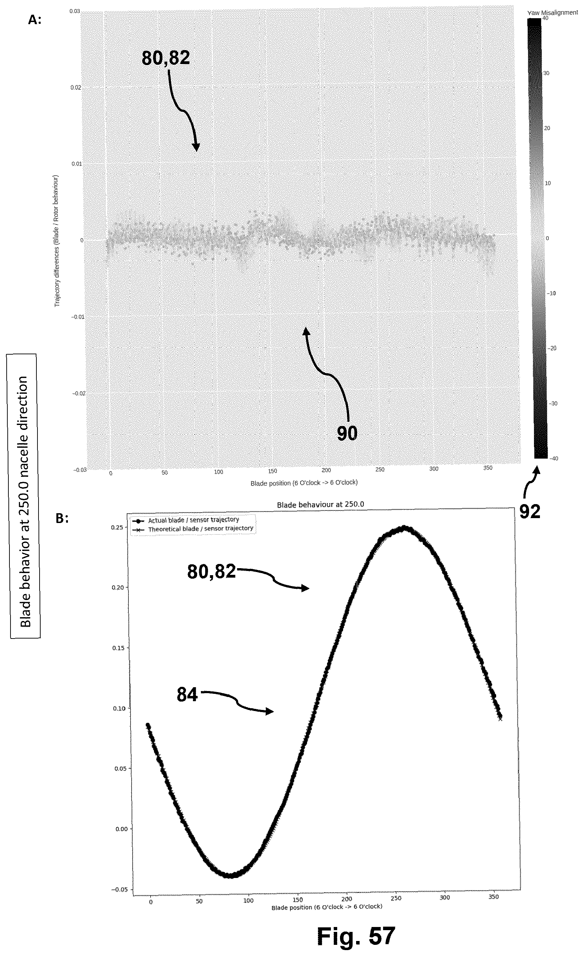

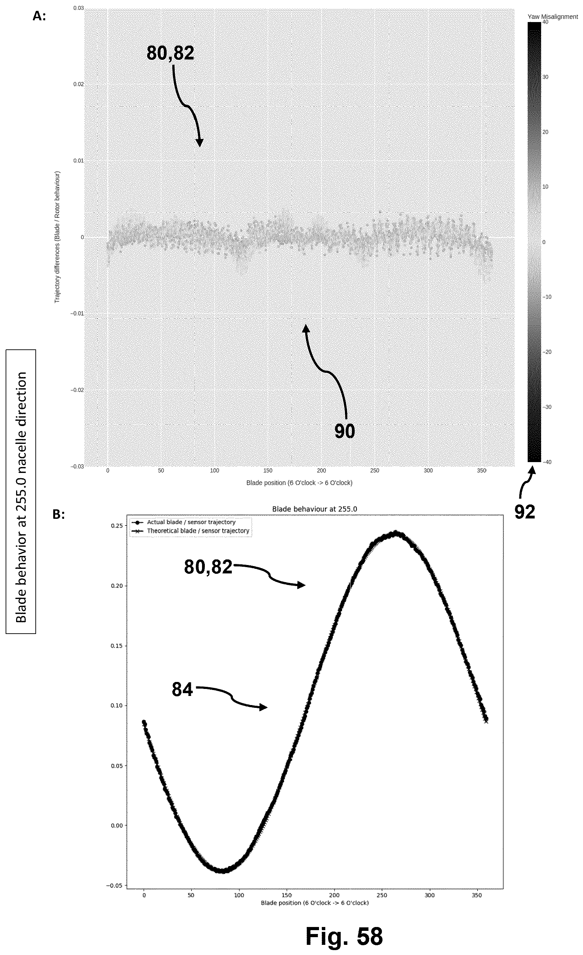

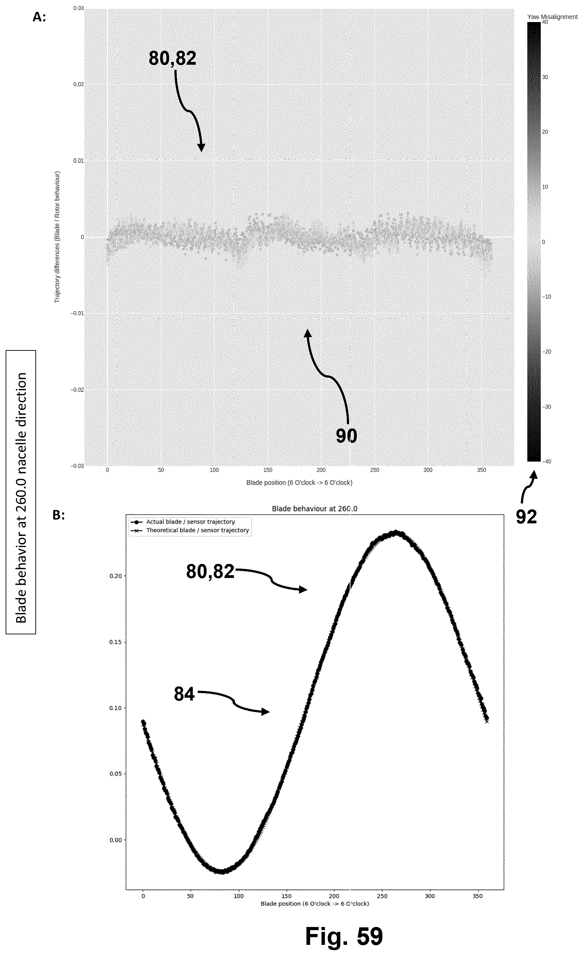

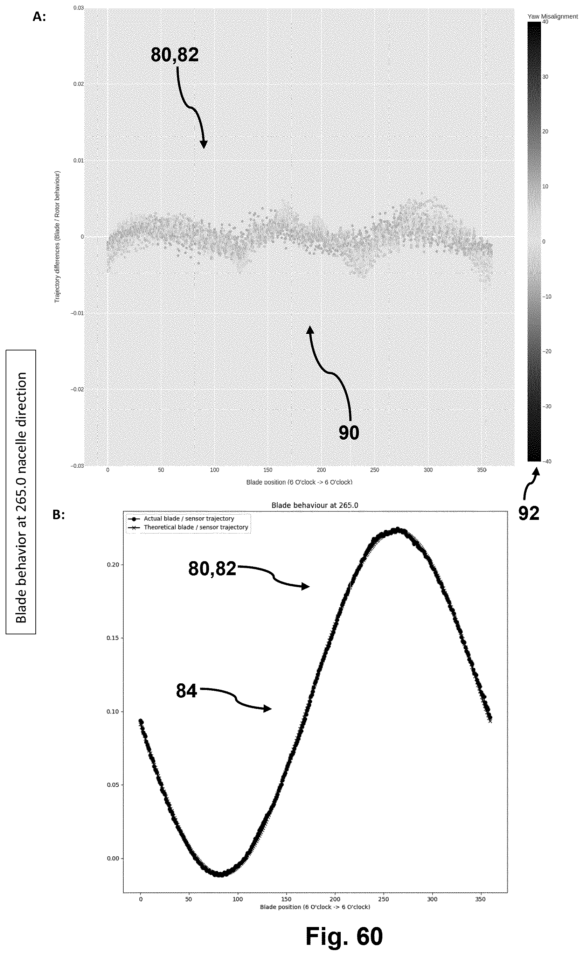

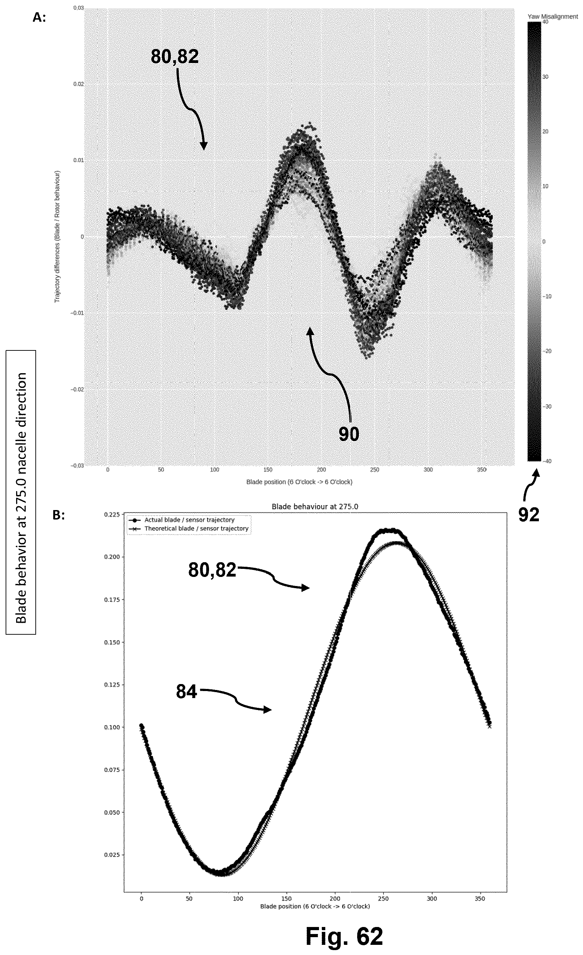

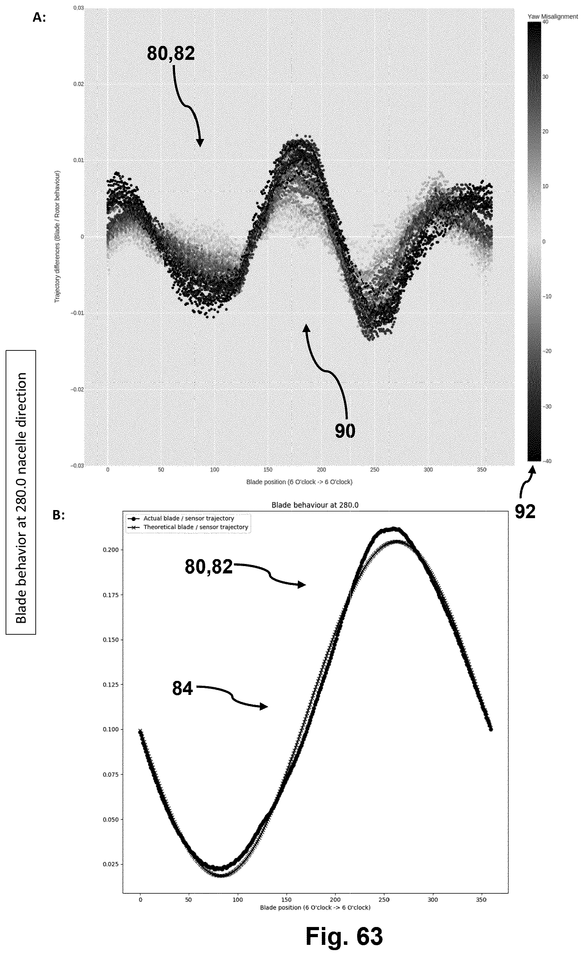

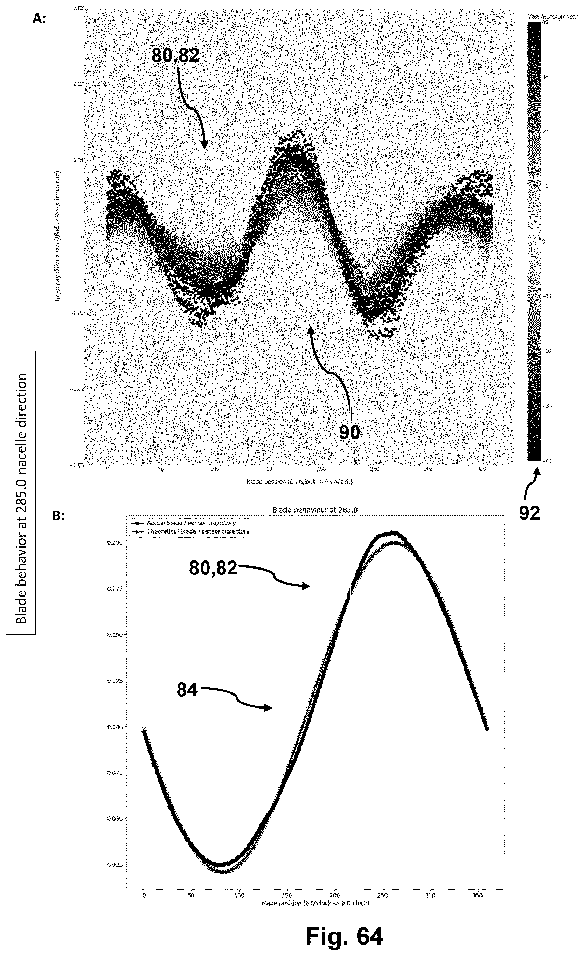

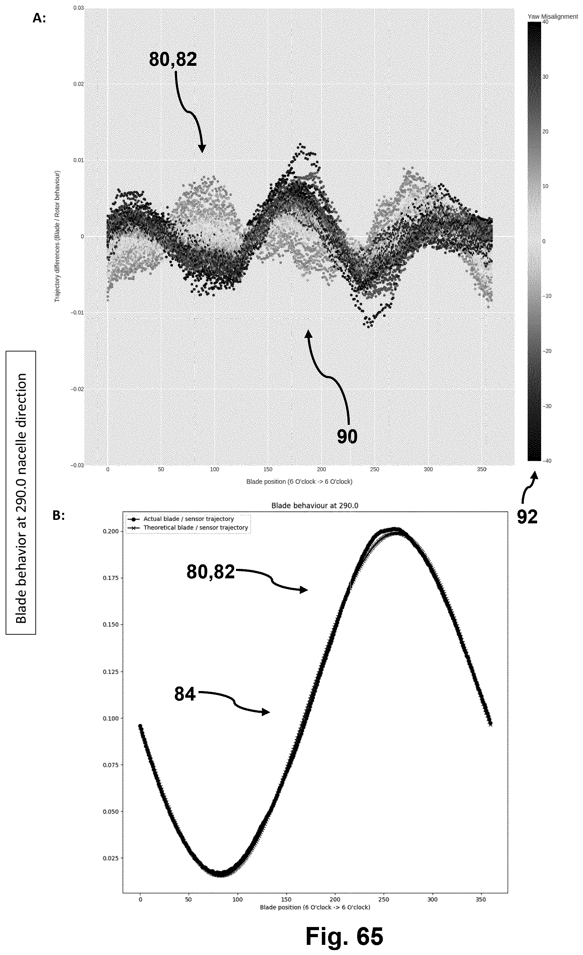

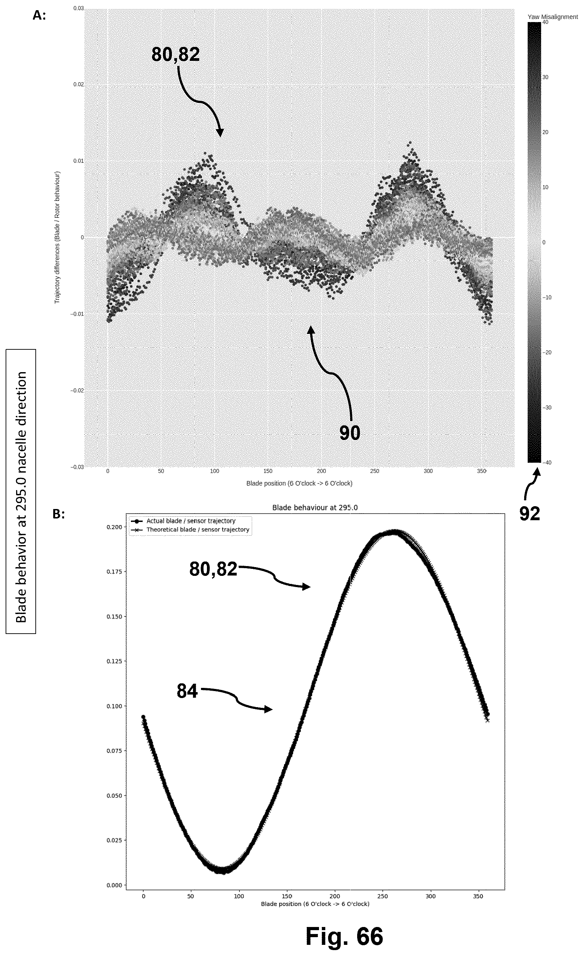

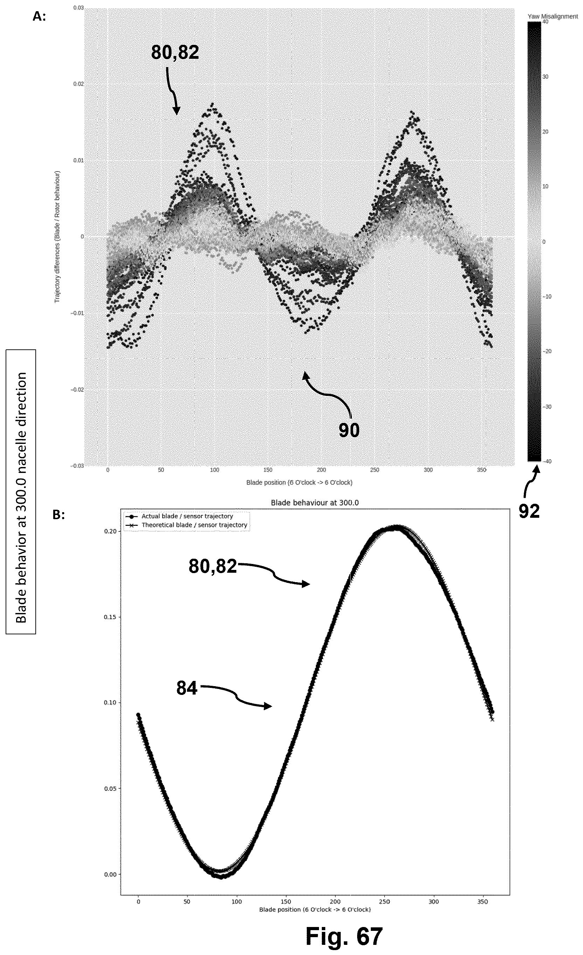

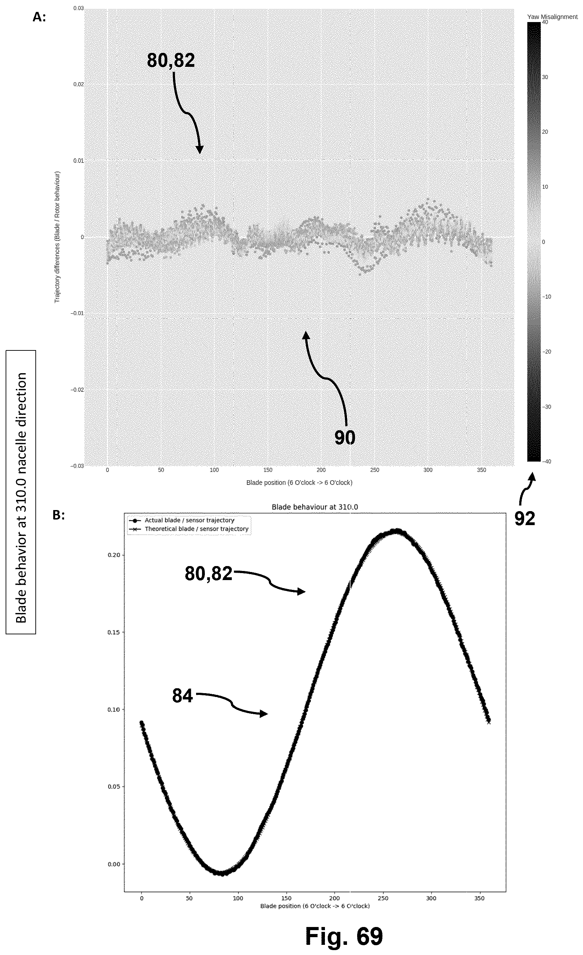

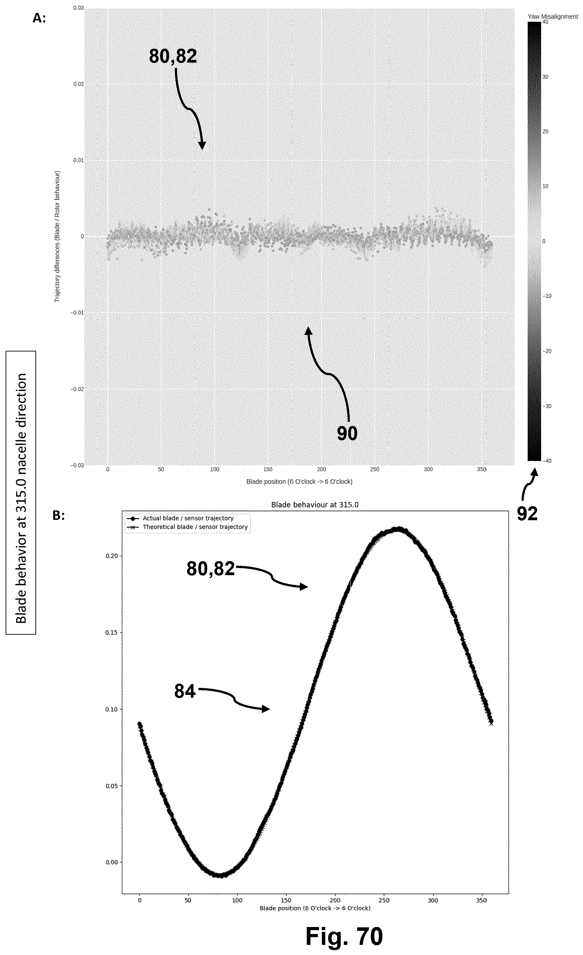

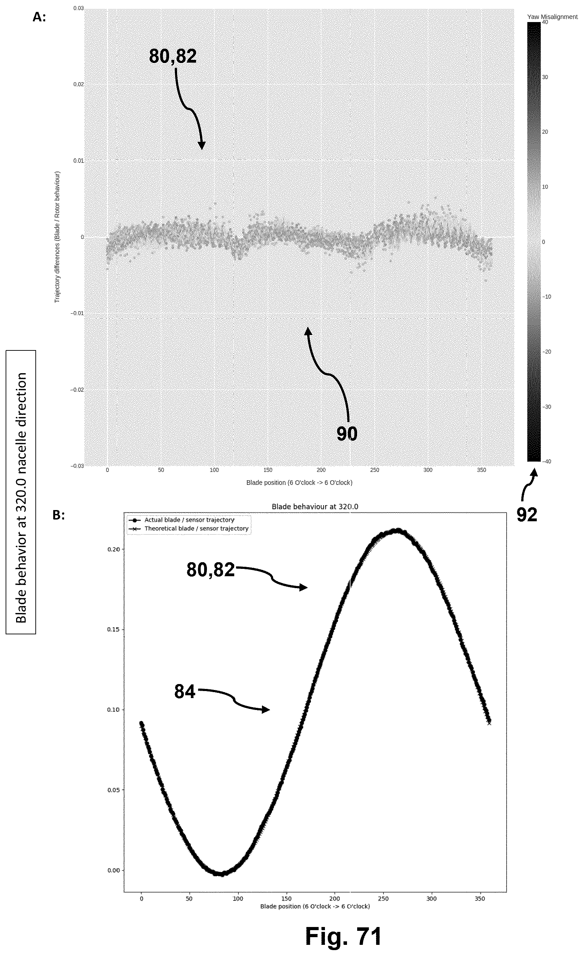

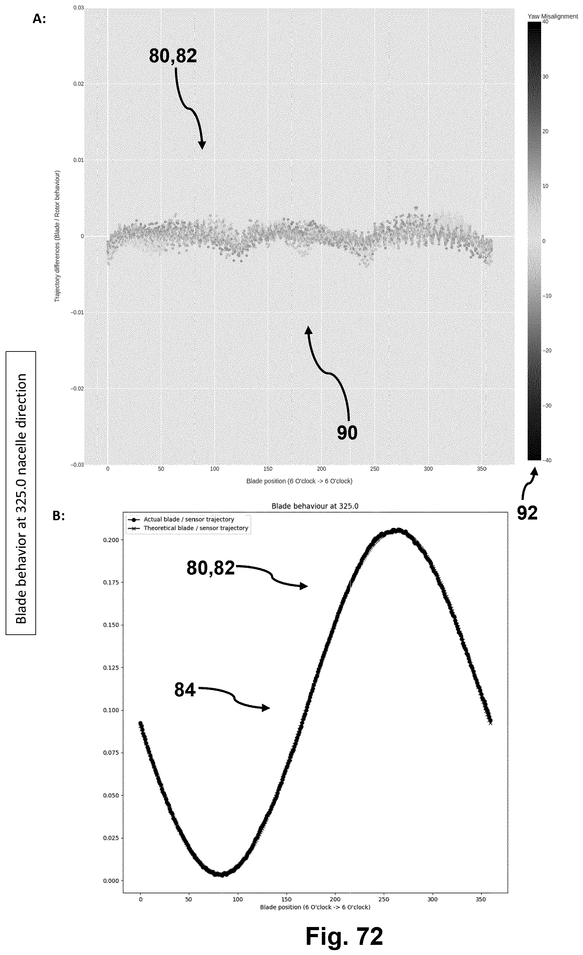

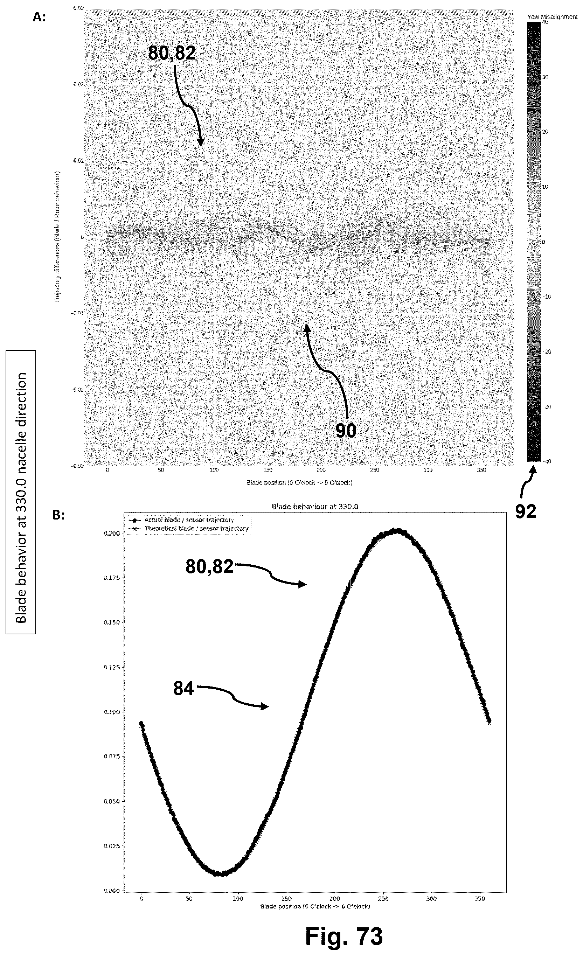

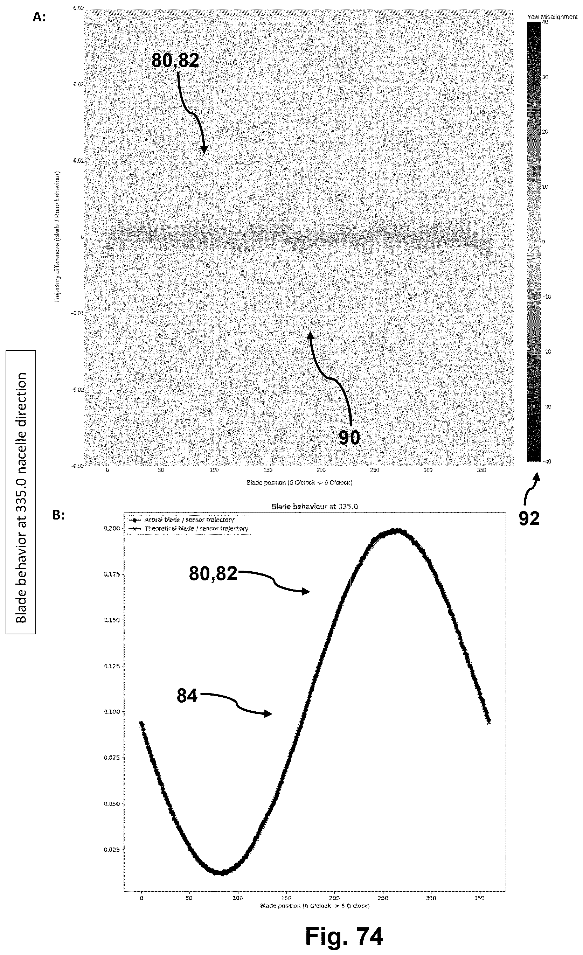

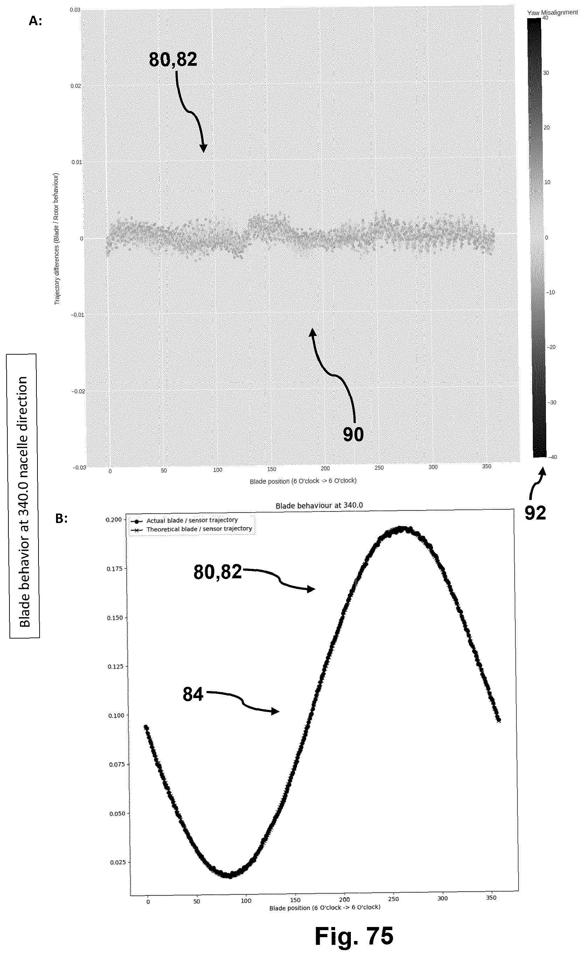

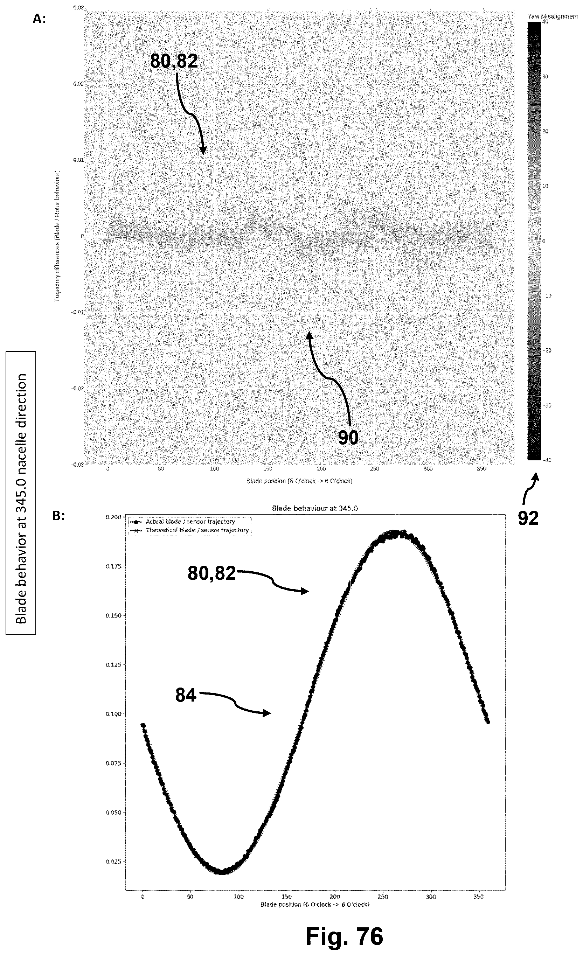

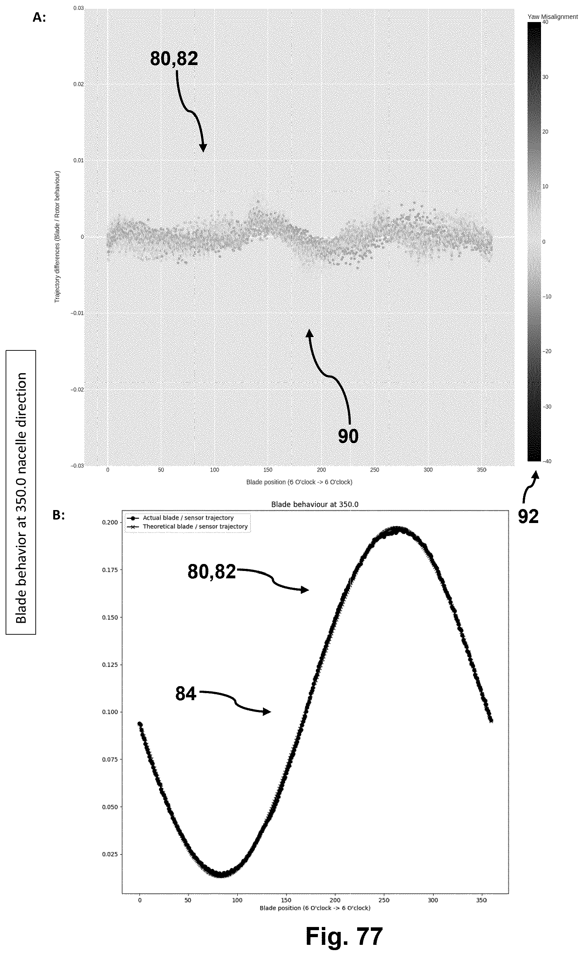

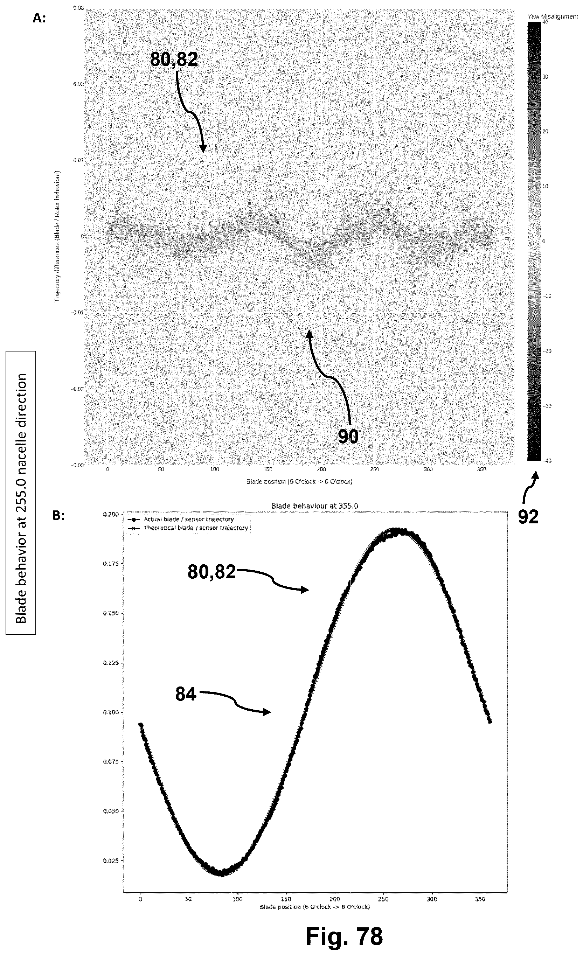

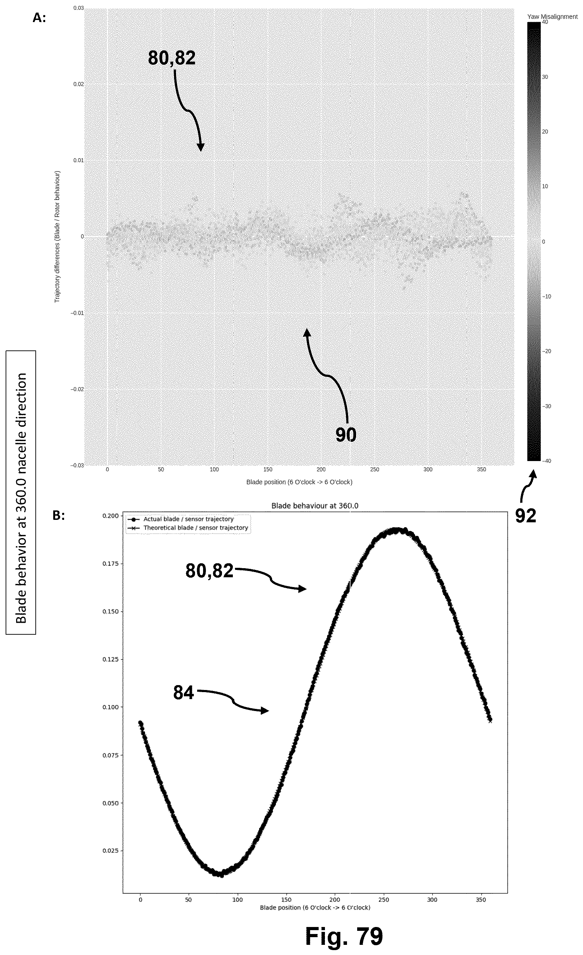

The shown wind turbine generator WTG can be equipped with a data processing unit 30. The data processing unit 30 comprises a communication module 32 adapted for communication with an accelerometer 20 installed in one of the wind turbine blades 16A, 16B,16C. The position of the accelerometer 20 is not shown in the figure. The sensory data 80 shown in figures 4-79 is measured by an accelerometer positioned two meters from a root of the blade 16, i.e. two meters from the rotor 14. However, the invention is not limited to this position and the accelerometer 20 could be positioned at other positions along the blade.

The data processing unit 30 further comprises a computation unit 34 comprising at least one processor and at least one memory that includes program code, wherein the memory and the program code is configured to cause the processor to execute the steps of the method according to the invention. In other embodiments, the data processing unit 30 is part of an external unit or server which may communicate with one or more accelerometers 20 positioned on one or more wind turbine blades 16. The data processing unit 30 may communicate with one or more wind turbine generators WTG. The communication module 32 may be in wired or wireless communication with the accelerometer 20 or accelerometers 20.

The data processing unit 30 may further be configured to send an alarm or stop a signal to a wind turbine generator WTG, a wake threshold value, or to send an alarm to an operator, as a function of a wake threshold value.

The test wind turbine generator WTG used for validating the method 100 was further equipped with a LIDAR as it is well known that LIDARS can measure wake and yaw misalignment relative to the wake.

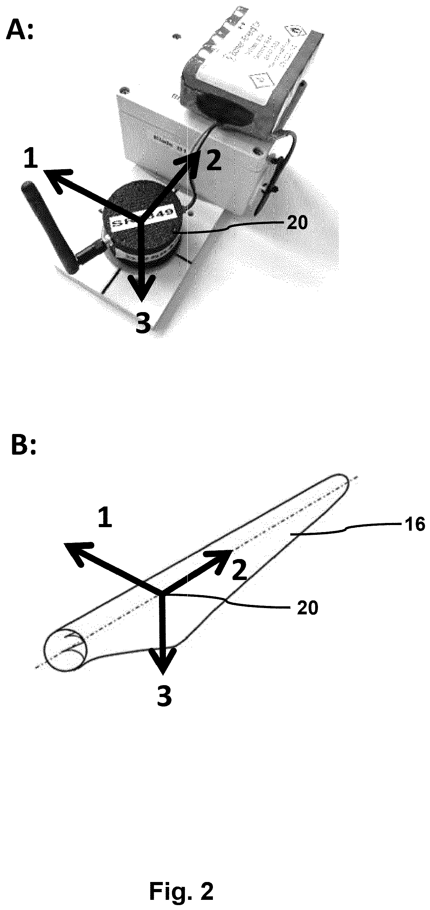

Fig. 2 illustrates an accelerometer 20 and dimensions of a wind turbine blade 16. Figure 2A discloses an example of a wireless accelerometer 20, which was used for collecting the sensory data 80 shown in figures 4-79. The accelerometer 20 measures three dimensions or channels - however the method 100 according to the invention can be performed using only sensory data 80 from a single channel. It is expected that using more sensory data 80 will further improve the invention.

Figure 2B discloses an accelerometer 20 positioned on a wind turbine blade 16 such that accelerometer 20 has an edgewise channel 1, a spanwise channel 2, and an flapwise channel 3. In theory, the orientation of the accelerometer 20 could be random but the shown orientation will simplify the data processing.

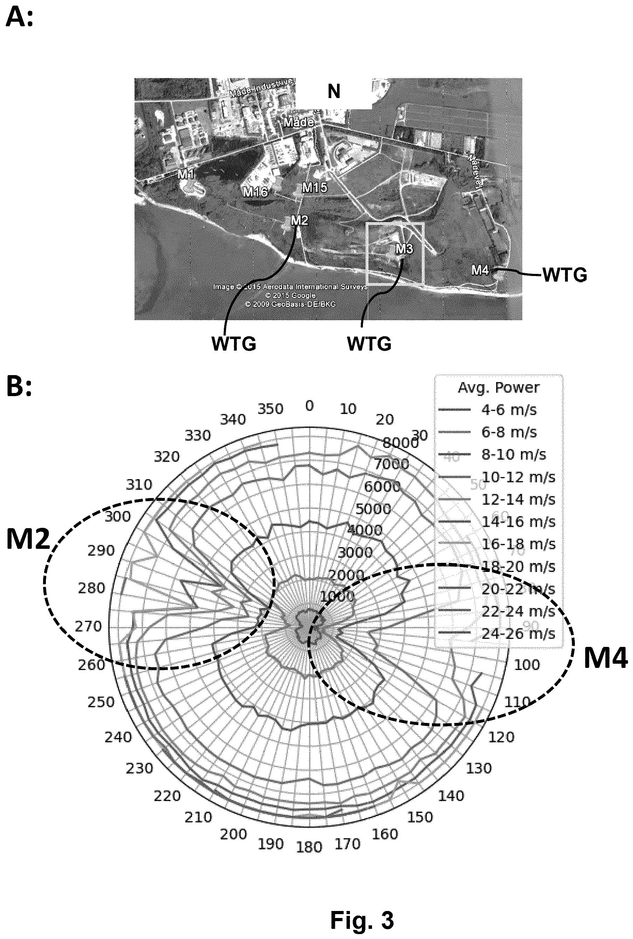

Fig. 3 illustrates a map around the wind turbine generator (WTG-M3) tested using the method 100 according to the invention and a power generation graph measured for the wind turbine generator WTG-M3.

The wind turbine generator WTG-M3 was used for validating the method 100. A blade 16 of the wind turbine generator WTG-M3 was equipped with an accelerometer 20 similar to figure 2A. The accelerometer 20 was positioned with an orientation similar to figure 2B and the accelerometer 20 was approximately 2 meters away from the root of the blade 20. However, the accelerometer 20 could be positioned at other distances from root of the blade 20.

The wind turbine generator WTG-M3 was further equipped with a LIDAR which was used for validating the method 100 by providing comparative data. Figure 3A shows that WTG-M3 is positioned near the Danish city Maade. North direction is marked by a "N". M4 and M2 represent two other wind turbine generators WTGs at Maade, thus one would expect WTG-M3 to experience wake when the wind direction is
- from East, Southeast, which is downstream from turbine WTG-M4; and
- from West, Northwest, which is downstream to WTG-M2.

In the following figures, the 0 degrees value is when the nacelle 12 direction of WTG-M3 is due North and 180 degrees value is when the nacelle 12 direction of WTG-M3 is due South. The numbering is otherwise assigned in the clockwise direction as shown in figure 3B.

Figure 3B discloses a circular plot of the power deficit for the WTG-M3 at different wind speed bins for all nacelle directions. Large power deficits are observed in the directions of WTG-M2 and WTG-M4. The power deficit is marked by two slashed circles. The black and white colouring of the figure means it is difficult to identify the different powers at the different wind speeds, but the innermost circle is 4-6 m/s and the second inner most circle 6-8 m/s and so o,n but for wind speed values above 14 m/s there is a large degree of overlap. This is due to the wind turbine generator WTG operating at nominal power.

Fig. 4 illustrates sensory data 80 from three channels of an accelerometer 20 installed on the wind turbine generator WTG-M3 shown in figure 3. The accelerometer 20 is installed as shown in figure 2B. Figure 4A shows the sensory data 80 measured at the edgewise channel 1, and figure 4B shows the sensory data 80 measured at the spanwise channel 2, and figure 4C shows the sensory data 80 measured at the flapwise channel 3.

Each of these measurements is sensory data 80 of a single rotation, thus the shown data is a sub-data group 82 for each channel. Since the position and orientation of the accelerometer is known, then it is possible to determine angular blade position points 18 of the blade 16 as a function of the gravity vector. In this case, it is possible to determine when the blade is at the 6 O'clock positions 18 and the 12 O'clock position 18.

In the following figures, only sensory data 80 from the flapwise channel 3 is used for determining wake conditions 90; however it is expected that the two other channels 1,2 could be used alone or in combination with the flapwise channel 3.

Fig. 5 illustrates two measurements of two different rotations where the wind turbine generator (M3) is affected by wake conditions. Figure 5A is measured while the nacelle is directed 90 degrees relative to North as shown in figure 3A-B. Figure 5B is measured while the nacelle is directed 120 degrees relative to North as shown in figure 3A-B.

In both cases, only part of the swept area of the blade 16 is affected by wake as shown in the small illustration of WTG-M4 upstream to WTG-M3. This affects the blade trajectory of the blade 16 as the wake causes blade 16 to deflect from an ideal blade trajectory which in most cases would be equal to a sine wave. In both embodiments, a sine wave is fitted to the sub-data groups 82 shown in figure 5A and figure 5; it is clear from each fit that the blade 16 does not follow an ideal blade trajectory.

The values between the fitted sine wave and the sensory data 80 of the sub-data group 82 can be subtracted to show the deviation from the ideal blade trajectory this is shown in figures 6A and 7A-79A.

Fig. 6 illustrates difference between fitted sine waves 84 and sensory data 80 of a plurality of rotations, and a graph showing standard deviations as a function of rotations per minute for wind from the West or Southwest.

Figure 6A shows multiple differences or deviations between sensory data 80 and the fitted sine waves 84. The colouring of the data points is based on data measured from the LIDAR and a calculated value of yaw misalignment 92. This yaw misalignment 92 is calculated using conventional and known methods. As the graph shows, it is possible to identify wake conditions 90 experienced by the blade 16 or wind turbine generator WTG in the swept area, and it is possible to identify whether only part of the swept area of the blade is affected or experience wake.

Figure 6A shows standard deviation calculated based on the difference between the fitted sine wave 84 and the sensory data 80 of the sub-data group 82 along the first axis and the rounds per minutes along the second axis. In the direction Southwest, where the WTG-M3 should not experience wake the standard deviation is rarely above 0.007 however in the West direction where the WTG-M3 should experience wake the standard deviation is rarely below 0.007. Thus, a simple and static threshold value and associated rule can in many cases be sufficient to determine whether WTG-M3 experience wake.

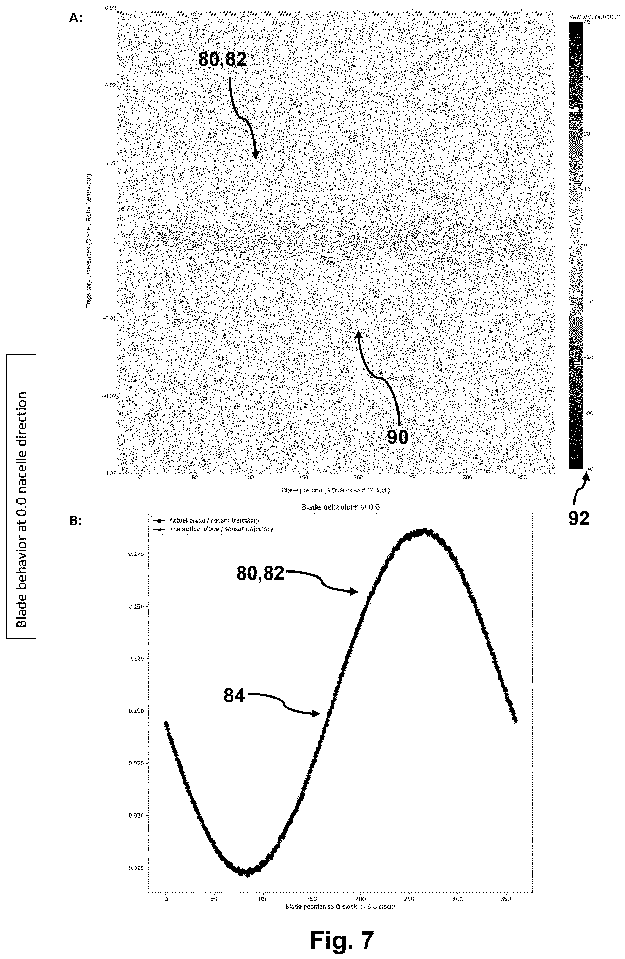

Figs. 7-79 illustrate sensory data 80 measured at wind turbine generator WTG-M3 divided into 5-degree sections, where 0 degrees is due north.

In all figures 7A-79A, the graph shows degrees along the first axis and the second axis shows the trajectory differences between the sensory data 80 of a sub-data group 82 containing single rotation and a fitted sine wave 84 (as shown in B). The graph shows several measurements stacked upon each other thus the points will be a bit scattered. The black/white bar to the right of the graph show the yaw misalignment 92 determined based on data measured by a LIDAR for confirmation of the method 100 of the invention.

In case of 7A, the difference is close to zero and the points are scattered around plus/minus zero and the yaw misalignment 92 is also close to zero and thus the points are mainly white/grey. Thus, the blade behaviour is such that the blade 16 is close to following the ideal blade trajectory. This is also evident from figure 7B.

In all figures 7B-79B, the graph shows a single example of sensory data 80 from a single sub-data group 82 containing a single rotation and the fitted wave function 84 being a sine wave. The wave function 84 can contain additional waves with different weight and/or amplitudes.

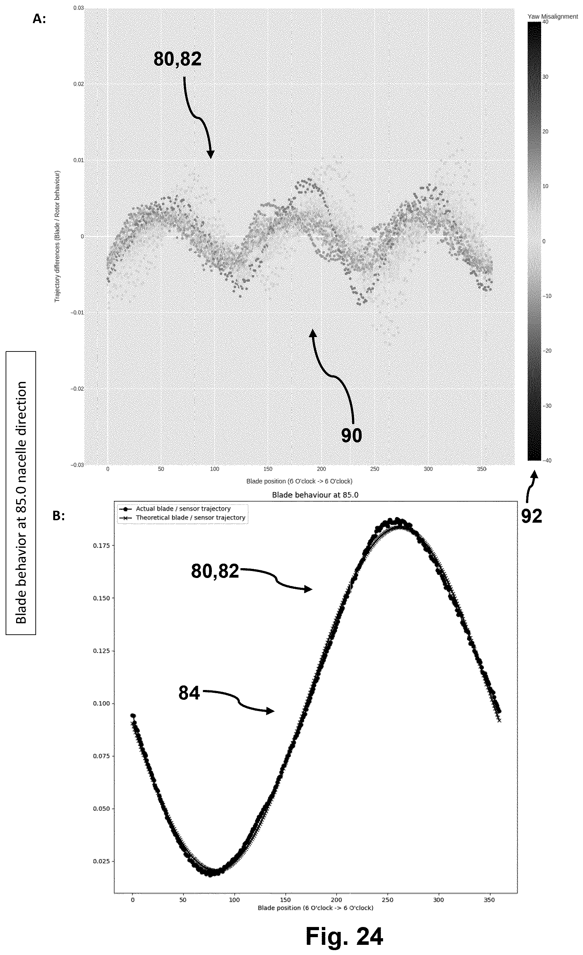

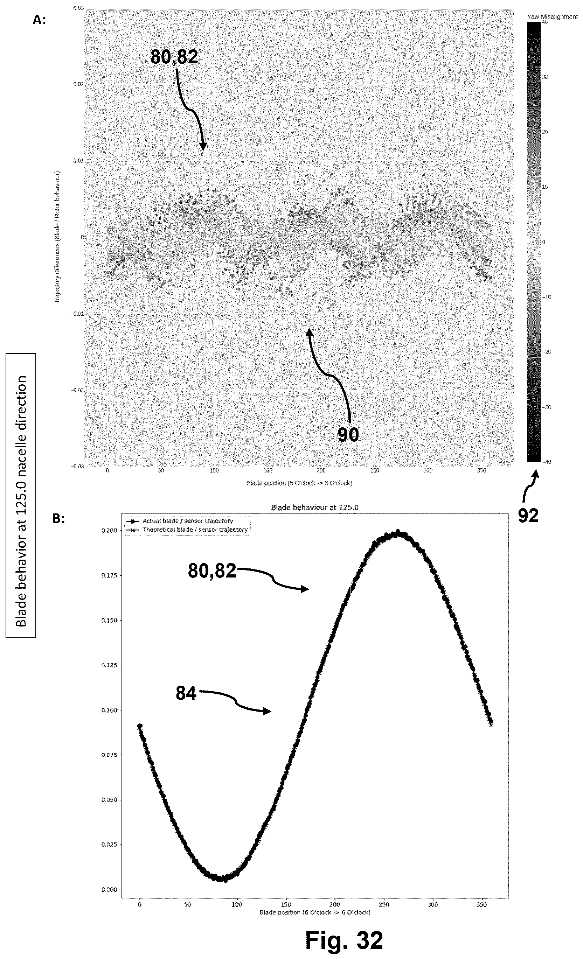

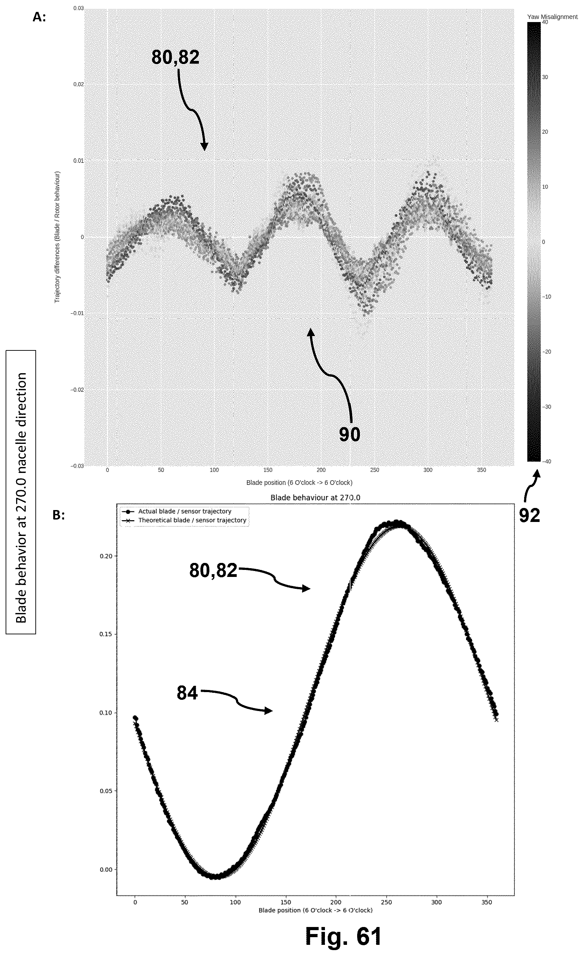

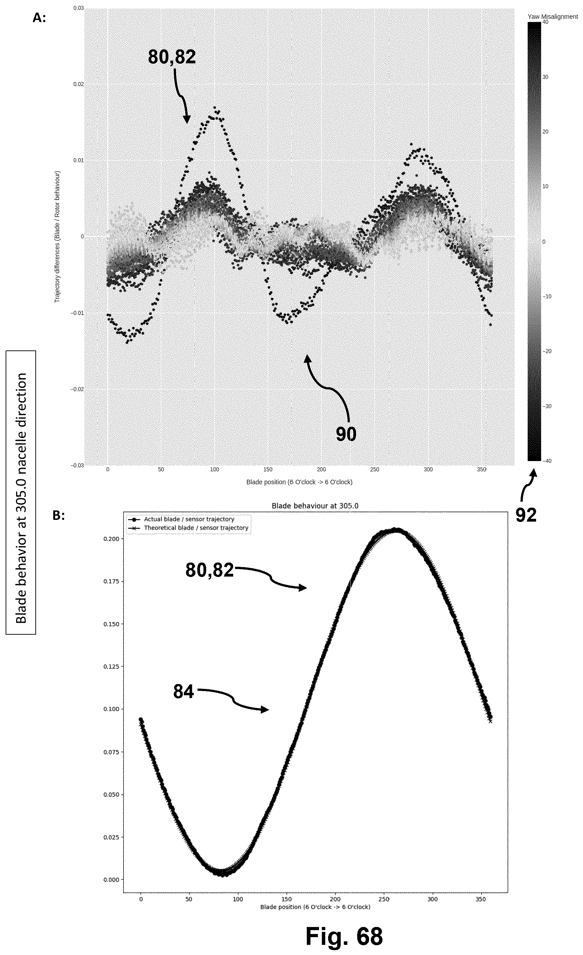

The data is measured on WTG-M3 and high wake levels are thus expected between degree 85 to 125 degrees as well as between 270 to 305 degrees. This is confirmed by the data, see figure 24 (85 degrees) to figure 32 (degree 125), and figure 61 (270 degrees), and figure 68 (305 degrees).

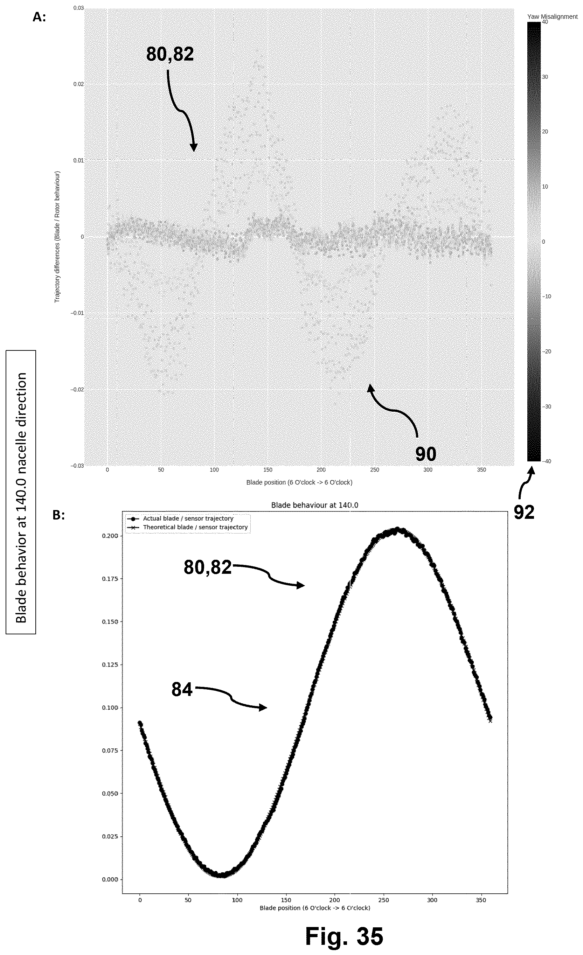

However, large deviations are also measured for some angles where the cause is unknown at the moment. See for example figure 35A which has measurements with large deviations from zero. The applicant has at the moment no explanation for the deviation from the ideal blade trajectory and it may be data error or due to an unknown event or an unknown source for wake. It could be that the WTG-M3 experienced a period of wind gusts of a significant strength or wind speeds of storm strength; it is at the moment unknown. Figure 3 5A is not the only example as it is expected that the method can be used to gain additional information not only related to wake from upstream wind turbine generators.

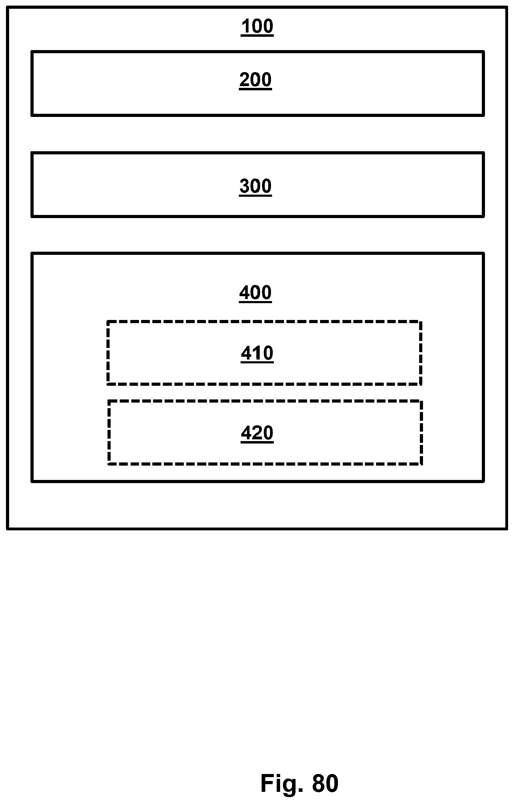

Fig. 80 illustrates a method 100 for determining wake conditions 90 at a wind turbine generator WTG by measuring blade deflection from an ideal blade trajectory. The wind turbine generator WTG comprises a blade 16, said blade comprising an accelerometer 20. The method 100 comprises steps of:
- measuring 200 sensory data 80 of the accelerometer 20 during operation,
- time-stamping and time-synchronizing 210the sensory data 80 collected by the accelerometer 20;
- dividing 300 the sensory data 80 into sub-data groups 82, wherein each sub-data group 82 comprises at least one full rotation of the blade 16;
- determining 400 wake conditions 90 as a function of at least one of the sub-data groups 82 and a wave function 84.

The step of dividing 300 may be performed as a function of the gravitational vector to identify one or more angular blade position points 18.

The step of dividing 300 may be performed as a function of the one or more angular blade position points 18.

The wave function 84 may be a sine wave fitted to the at least one sub-data group 82. The sine wave may be fitted to each sub-data group 82.

The step of determining 400 includes a step of step of computing 410 a standard deviation between the at least one of the sub-data groups 82 and the wave function 84.

The step of determining 400 includes a step of subtracting 420 the sub-data groups 82 and the wave function 84. Spectral analysis may performed on the subtracted data from the step of subtracting 420.

The method 100 may be performed in real-time during normal operation such that wind turbine generators WTGs can be controlled in order to limit the negative effect of wake.

## Claims

1. A method (100) for determining wake conditions (90) at a wind turbine generator (WTG) by measuring blade deflection from an ideal blade trajectory, wherein the wind turbine generator (WTG) comprising a blade (16), said blade comprising an accelerometer (20), the method (100) comprising steps of:
- measuring (200) sensory data (80) of the accelerometer (20) during operation,
- time-stamping and time-synchronizing (210) the sensory data (80) collected by the accelerometer (20);
- dividing (300) the sensory data (80) into sub-data groups (82), wherein each sub-data group (82) comprises at least one full rotation of the blade (16);
- determining (400) wake conditions (90) as a function of at least one of the sub-data groups (82) and a wave function (84).

2. Method (100) according to claim 1, wherein the step of dividing (300) is performed as a function of the gravitational vector to identify one or more angular blade position points (18).

3. Method (100) according to claim 2, wherein the step of dividing (300) is performed as a function of the one or more angular blade position points (18).

4. Method (100) according to any one of claims 1 to 3, wherein the wave function (84) is a sine wave fitted to the at least one sub-data group (82).

5. Method (100) according to claim 4, wherein the sine wave is fitted to each sub-data group (82).

6. Method (100) according to any one of claims 1-5, wherein the step of determining (400) includes a step of step of computing (410) a standard deviation between the at least one of the sub-data groups (82) and the wave function (84).

7. Method (100) according to any one of claims 1-6, wherein the step of determining (400) includes a step of subtracting (420) the sub-data groups (82) and the wave function (84).

8. Method (100) according to claim 7, wherein spectral analysis is performed on the subtracted data from the step of subtracting (420).

9. Method (100) according to any one of claims 1-6, wherein the method (100) is performed in real-time during normal operation.

10. A data processing unit (30) for determining wake conditions (90) at a wind turbine generator (WTG), the data processing unit (30) comprising
- a communication module (32) adapted for communication with an accelerometer (20) installed in a wind turbine blade (16), and
- a computation unit (34) comprising at least one processor and at least one memory that includes program code, wherein the memory and the program code is configured to cause the processor to execute the steps of the method according to any one of claims 1 to 9.

11. The data processing unit (30) according to claim 10, wherein the communication module (32) is in wired or wireless communication with the accelerometer (20).

12. The data processing unit (30) according to claim 10 or 11, wherein the data processing unit (30) is configured to send an alarm or stop a signal to a wind turbine generator (WTG) or an operator as a function of a wake threshold value.

13. A wind turbine generator (WTG) comprising
- a blade (16) comprising an accelerometer (20);
- a data processing unit (30) according to any one of claims 10 to 12.

14. A wind turbine park comprising a plurality of wind turbine generators (WTG), wherein
- at least one of the plurality of wind turbine generators (WTG) is a wind turbine generator (WTG) according to claim 13; and/or
- the wind turbine park comprises a data processing unit according to any one of claims 10 to 12 in communication with an accelerometer (20) on a blade (16) of a wind turbine generator (WTG).

15. A wind turbine park (40) according to claim 14, wherein the data processing unit (30) is further configured to control one or more of the wind turbine generators (WTG) of the wind turbine park as a function of the wake conditions (90) of the at least one of the wind turbine generators (WTG).
